# EUROPEAN PATENT APPLICATION

(11) **EP 2 418 459 A1**
(43) Date of publication of application: **15.02.2012**
(21) Application number: 09842993.9
(22) Date of filing: 06.04.2009
(51) Int. Cl.: G01C 21/00, G06F 17/28, G06F 17/30, G08G 1/005

(54) **NAVIGATION SYSTEM, ROUTE SEARCH SERVER, ROUTE SEARCH AGENT SERVER, AND NAVIGATION METHOD**

(71) Applicant: Navitime Japan Co., Ltd., Tokyo 107-0062 (JP)
(72) Inventor: UYAMA, Hiroshi, Tokyo 107-0062 (JP); IDA, Masaru, Tokyo 107-0062 (JP)
(74) Representative: HOFFMANN EITLE
(86) International application number: PCT/JP2009/057077
(87) International publication number: WO 2010/116483

(57) **Abstract**

In a navigation system that finds routes and provides navigation extending across countries or regions, navigation is performed for cases in which languages differ in the countries or regions being navigated. The navigation system is equipped with first and second route search servers (30A, 30B), which use first and second areas as service areas, respectively, and a terminal device (20). When the terminal device (20) requests a route search, the system determines the second route search server (30B) with the first route search server (30A) to find and link the routes in the respective areas and to determine a recommended route. If the language used by the route search server is different from the language used by the terminal device (20), the route search server translates words other than key words, such as proper nouns, in the navigation information, which gives the recommended route, into the language used by the terminal device (20) and supplies the translation to the terminal device (20).

## Description

### TECHNICAL FIELD

The present invention relates to a navigation system for finding candidate routes and navigating from any departure place to a destination by foot, by automobile, or by public transportation; and relates in particular to a navigation system, a route search server, a route search agent server, and a navigation method for carrying out navigation in cases where the countries or regions being navigated have different languages, when finding routes and navigating with roads or transportation that extend across countries or regions.

### BACKGROUND ART

In conventional practice, there have been known navigation devices and navigation systems for searching for a route from a desired departure place to a destination and guiding a user using map data and road data. Practical applications of such navigation devices and navigation systems have included communication-type navigation systems and the like in which a portable phone or a car navigation device installed in an automobile for providing navigation assistance to a driver is used as a terminal for navigation, route search conditions are specified and a route search request is sent to the route search server when the device is used, a route search is performed based on the route search conditions in the route search server, the result is transmitted to the car navigation device or the portable phone, and navigation is performed.

Particularly, communication-type navigation systems that use portable phones as terminals for navigation are sometimes used as navigation systems for pedestrians. When used as a navigation system for a pedestrian, a communication-type navigation system is preferably provided with a navigation function that includes the use of public transportation. Therefore, there are also navigation systems which, in addition to searches and guidance of walking routes, have a function for storing transportation system lines and operating time data for railroads, aircraft, buses, and the like in a route search server, and for providing guidance of routes from desired departure places to desired destinations (ridden candidate trains and the like) in addition to searches of and guidance for walking routes. There are also transportation guidance systems which receive and display the distribution of information on lines and time schedules of transportation systems, rideable trains, and the like from an information distribution server without a search for a walking route.

The route search server is provided with a database having roads (routes) included in the map data, wherein the nodal points and turning points thereof are recorded as nodes and the routes joining nodes together are recorded as links, and the cost information (distance and required time) of all the links is stored corresponding to the respective links. The route search server can provide a portable navigation terminal with guidance for the shortest possible route by referring to the database, sequentially searching for links extending from the node of the departure place and the node of the destination, and creating a guidance route from the nodes and links having the smallest possible link cost information. Either a method known as the label-correcting method or a method known as the Dijkstra method is used as the method of this manner of route search. In Patent Document 1 hereinbelow, a route search method that uses the Dijkstra method is also disclosed.

A route search system that searches for routes using a transportation system is provided with an operation time database consisting of operation time data of transportation systems incorporated into a database on the basis of a departure date and time, a departure place, a destination, an arrival time, and other route search conditions indicated by a user; and data consisting of a transportation network incorporated into a database on the basis of the operation time database. The configuration is designed so that these databases are referenced, useable transportation means (individual trains and line buses) connecting the departure place to the destination including connections (transfers) are sequentially followed as routes, and one or more candidates of guidance routes (the departure place station, the destination station, lines, trains, and other transportation means) conforming to the route search conditions are suggested. Further possible examples of the route search conditions include the required time, the number of connections, fares, and the like.

The map data and route search network data provided to a common navigation system are data on the geographic regions (also known as service target areas) in which the system provides navigation service. For example, with a normal navigation system, the service target area will be within a certain country's borders, or a specific geographic region within the country's borders will be the service target area.

In this case, if the departure place and the destination are within the service target area of the navigation system, there are no obstacles whatsoever to the route search and the navigation. However, in a case where the departure place is within one country's borders but the destination is within the borders of another country with a different language and also lies within the service target area of a different route search server, a language problem may arise. That is, if a route search is carried out from a route search server having the area of the departure place as the service area, doing so via a route search server whose service area is the area of the destination, the navigation displayed on the display screen of the mobile phone or navigation device will be in the language used by the route search server whose service area is the area of the departure place. This represents an inconvenience for the user.

Patent Document 1 (Japanese Laid-open Patent Application No. 2002-315036) below discloses a map information provision method and acquisition method whereby, on the basis of absolute position information of a moving point transmitted from a mobile phone roaming in a foreign country, map information about the current position is provided over a communication line, and text descriptions on the map information screen are converted into a desired language and provided over a communication line, whereby the mobile phone can easily and reliably acquire map information for the point.

### [Prior Art Literature]

### [Patent Literature]

[Patent Document 1]: Japanese Laid-open Patent Application No. 2002-315036

### DISCLOSURE OF THE INVENTION

### [Problems the Invention Is Intended To Solve]

However, if a text description included in map information is converted into another language as disclosed in Patent Document 1 below, when that location is visited, the display language actually displayed on street corners and the like will differ from the display language displayed on the terminal device, resulting in the problem that the user will not be able to intuitively decide whether the current position conform to the map displayed on the terminal device.

With the foregoing in view, an object of the present invention is to provide a navigation system constructed such that, in the case of finding a route from a given departure place to a destination positioned in a service area of another route search server, navigation text other than pre-registered key words such as place names, vehicle names, and line names in the navigation information is translated by a translation server so as to conform to the language supported by the terminal device; and a combination of translated key words and untranslated navigation text is distributed to the terminal device, whereby the display on the terminal device can take place in the language understood by the user, whereas place names and line names can be displayed in the language of the point.

### [Means for Resolving These Problems]

In order to solve the problems, the first invention resides in a navigation system composed of a first route search server having a first area as a service area, a second route search server having a second area as a service area, a terminal device, and a translation server connected via a network, **characterized in that**
the first route search server is provided with server determination means for determining a route search server whose service area is an area that includes a point indicated by point information constituting a route search parameter received from the terminal device;
the second route search server is provided with route searching means for finding an optimum route that meets the route search parameter, navigation information editing means for creating navigation information on the basis of optimum route data found by the route searching means, output language determination means for determining whether the navigation information is in the language to be output by the terminal device, and text extraction means for extracting navigation text excepting key words from the navigation information;
the terminal device stores language information to be displayed; when the terminal device transmits the language information and point information constituting a route search parameter to the first route search server and requests a route search, in a case where an area including a point indicated by the point information is the second area, the server determination means of the first route search server determines a route search server whose service area is the area in question to be the second route search server, whereupon the first route search server transmits the language information and point information constituting the route search parameter to the second route search server to prompt for a route search;
in the second route search server, an optimum route that meets the route search parameter is found by the route searching means, and the navigation information editing means creates navigation information on the basis of the found optimum route data, and transmits the information together with the optimum route data to the first route search server;
the first route search server transmits the optimum route information and navigation information received from the second route search server to the terminal device;
in the second route search server, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the first route search server or to the terminal device.

Another aspect of the navigation system according to the first invention is **characterized in that** in the second route search server, when there has been a request for navigation on the basis of navigation information transmitted to the terminal device, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the terminal device.

Another aspect of the navigation system according to the first invention is **characterized in that** in the second route search server, an optimum route that meets the route search parameter is found by the route searching means, the navigation information editing means creates navigation information on the basis of the found optimum route data, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the first route search server.

Another aspect of the navigation system according to the first invention is **characterized in that** the route search parameter includes a departure place within the first area, the first route search server is provided with route searching means and with candidate node extraction means for extracting point information of at least one candidate node reachable in the second area from the first area, and the route searching means of the first route search server finds an optimum route leading from the departure place to the candidate node, and transmits the route together with the optimum route information received from the second route search server to the terminal device.

Another aspect of the navigation system according to the first invention is **characterized in that** the navigation information is composed of the key words and the navigation text, the keys words are proper names including place names and line names, and the navigation text is text for navigating a route.

Another aspect of the navigation system according to the first invention is **characterized in that** the second route search server is provided with route search application screen creation means for creating screens composed with XML in order to display information including the navigation information on the terminal device, the text extraction means extracts text excepting screen data included in XML and the key words from the navigation information, and prompts the translation server for translation, and the navigation information editing means combines the translated text and the key words to create translated screen data.

A second invention resides in a route search server constituting a first route search server in a navigation system composed of the first route search server having a first area as a service area, a second route search server having a second area as a service area, a terminal device, and a translation server connected via a network, characterized by
being provided with server determination means for determining a route search server whose service area is an area that includes a point indicated by point information constituting a route search parameter received from the terminal device; wherein
when a route search request including language information indicating a language to be displayed on the terminal device and point information constituting a route search parameter is received from the terminal device, in a case where an area including a point indicated by the point information is the second area, the route search server whose service area is the area in question is determined by the server determination means to be the second route search server, the language information and point information constituting the route search parameter are transmitted to the second route search server which is asked for a route search, and when translated navigation information created in the second route search server and in which only navigation text excepting key words has been translated by the translation server is received, the translated navigation information in question is transmitted to the terminal device.

A third invention resides in a route search server constituting a second route search server in a navigation system composed of a first route search server having a first area as a service area, the second route search server having a second area as a service area, a terminal device, and a translation server connected via a network, characterized by
being provided with route searching means for finding an optimum route that meets a route search parameter from the terminal device, navigation information editing means for creating navigation information on the basis of optimum route data found by the route searching means, output language determination means for determining whether the navigation information is in the language to be output by the terminal device, and text extraction means for extracting navigation text excepting key words from the navigation information;
in the second route search server, an optimum route that meets the route search parameter is found by the route searching means, and the navigation information editing means creates navigation information on the basis of the found optimum route data and transmits the information together with the optimum route data to the first route search server; and
in the second route search server, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the first route search server or to the terminal device.

Another aspect of the route search server according to the second or third invention is **characterized in that** the route search parameter includes a departure place within the first area, the first route search server is provided with route searching means and with candidate node extraction means for extracting point information of at least one candidate node reachable in the second area from the first area, and the route searching means of the first route search server finds an optimum route leading from the departure place to the candidate node, and transmits the route together with the optimum route information received from the second route search server to the terminal device.

A fourth invention resides in a route search server constituting one of a plurality of route search servers in a navigation system composed of the plurality of route search servers having different areas as respective service areas, a terminal device, and a translation server connected via a network, characterized by being provided with server determination means for determining a route search server whose service area is an area that includes a point indicated by point information constituting a route search parameter received from the terminal device, route searching means for finding an optimum route that meets the route search parameter, navigation information editing means for creating navigation information on the basis of optimum route data found by the route searching means, output language determination means for determining whether the navigation information is in the language to be output by the terminal device, and text extraction means for extracting navigation text excepting key words from the navigation information; wherein
in a case where a route search request including language information indicating a language to be displayed on the terminal device and point information constituting a route search parameter is received from the terminal device, the server determination means determines a route search server whose service area is a point indicated by the point information as the route search parameter, transmits the language information and point information constituting the route search parameter to the determined route search server, and asks for a route search, and in a case where navigation information is received from the route search server asked for the route search, transmits the navigation information to the terminal device;
in a case where a route search request including language information and point information constituting a route search parameter is received from another route search server, an optimum route that meets the route search parameter is found by the route searching means, and the navigation information editing means creates navigation information on the basis of the found optimum route data and transmits the information together with the optimum route data to the other route search server; and
the output language determination means determines whether the language of the navigation information is the same as the language identified by the language information, and in a case where the language is not that same as that identified by the language information, the text extraction means extracts navigation text excepting key words from the navigation information and prompts the translation server for translation, and when the navigation text translated into the same language as the language information is received from the translation server, the navigation information editing means creates translated navigation information that combines the translated navigation text and the key words, and provides the information to the terminal device or to the other route search server from which the route search request was received.

Another aspect of the route search server according to the fourth invention is **characterized in that** the route search parameter includes a departure place within an area, the route search server is provided with route searching means and with candidate node extraction means for extracting point information of at least one candidate node reachable in another area from the area, and the route searching means of the route search server finds an optimum route leading from the departure place to the candidate node, and transmits the route together with the optimum route information received from the other route search server to the terminal device.

Another aspect of the route search server according to the second to fourth invention is **characterized in that** the navigation information is composed of the key words and the navigation text, the keys words are proper names including place names and line names, and the navigation text is text for navigating a route.

Another aspect of the route search server according to the second to fourth invention is **characterized in that** the route search server is provided with route search application screen creation means for creating screens composed with XML in order to display information including the navigation information on the terminal device, the text extraction means extracts text excepting screen data included in XML and the key words from the navigation information, and prompts the translation server for translation, and the navigation information editing means combines the translated text and the key words to create translated screen data.

A fifth invention resides in a navigation method in a navigation system composed of a first route search server having a first area as a service area, a second route search server having a second area as a service area, a terminal device, and a translation server connected via a network, **characterized in that** language information to be displayed is stored in the terminal device;
the language information and point information constituting a route search parameter are transmitted from the terminal device to the first route search server to request a route search;
in a case where an area including a point indicated by the point information is the second area, the first route search server determines a route search server whose service area is the area in question to be the second route search server, and transmits the language information and point information constituting the route search parameter to the second route search server to prompt for a route search;
the second route search server finds an optimum route that meets the route search parameter, creates navigation information on the basis of the found optimum route data, and transmits the information together with the optimum route data to the first route search server;
in the second route search server, it is determined whether the language of the navigation information is the same as the language identified by the language information, and in a case where the language is not that same as that identified by the language information, navigation text excepting key words is extracted from the navigation information and the translation server is asked for translation;
the translation server translates the navigation text into the same language as the language information and transmits the translation to the second route search server; and the second route search server creates translated navigation information that combines the translated navigation text and the key words, for transmission via the first route search server, or to the terminal device.

Another aspect of the navigation method according to the fifth invention is **characterized in that** in the second route search server, when there has been a request for navigation on the basis of navigation information transmitted to the terminal device, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the terminal device.

Another aspect of the navigation method according to the fifth invention is **characterized in that** in the second route search server, an optimum route that meets the route search parameter is found by the route searching means, the navigation information editing means creates navigation information on the basis of the found optimum route data, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the first route search server.

Another aspect of the navigation method according to the fifth invention is **characterized in that** the route search parameter includes a departure place within the first area, the first route search server is provided with route searching means and with candidate node extraction means for extracting point information of at least one candidate node reachable in the second area from the first area, and the route searching means of the first route search server finds an optimum route leading from the departure place to the candidate node, and transmits the route together with the optimum route information received from the second route search server to the terminal device.

Another aspect of the navigation method according to the fifth invention is **characterized in that** the navigation information is composed of the key words and the navigation text, the keys words are proper names including place names and line names, and the navigation text is text for navigating a route.

Another aspect of the navigation method according to the fifth invention is **characterized in that** the second route search server is provided with route search application screen creation means for creating screens composed with XML in order to display information including the navigation information on the terminal device, the text extraction means extracts text excepting screen data included in XML and the key words from the navigation information, and prompts the translation server for translation, and the navigation information editing means combines the translated text and the key words to create translated screen data.

A sixth invention resides in a navigation system composed of a first route search server having a first area as a service area, a second route search server having a second area as a service area, a terminal device connected via a network to at least the first route search server in the first area, and a route search agent server connected to a plurality of route search servers, **characterized in that**
the route search agent server is provided with server determination means for determining a route search server whose service area is an area that includes a point indicated by point information constituting a route search parameter received from the first route search server when the first route search server has received point information determined to not be the service area thereof;
the second route search server is provided with route searching means for finding an optimum route that meets the route search parameter, navigation information editing means for creating navigation information on the basis of optimum route data found by the route searching means, output language determination means for determining whether the navigation information is in the language to be output by the terminal device, and text extraction means for extracting navigation text excepting key words from the navigation information;
the terminal device stores language information to be displayed;
when the terminal device transmits the language information and point information constituting a route search parameter to the first route search server and requests a route search, in a case where the server determination means of the first route search server has determined, on the basis of an area including a point indicated by the point information, that the point indicated by the point information is not within the service area of the first route search server, the first route search server transmits the language information and point information constituting the route search parameter to the route search agent server to prompt a route search;
in a case where the server determination means, on the basis of route search prompt information received from the first route search server, discriminates that the route search server having the point as the service area is the second route search server, the route search agent server transmits the language information and point information constituting the route search parameter to the second route search server;
in the second route search server, an optimum route that meets the route search parameter is found by the route searching means, and the navigation information editing means creates navigation information on the basis of the found optimum route data and transmits the information together with the optimum route data to the route search agent server;
the route search agent server transmits the optimum route information and navigation information received from the second route search server to the terminal device;
in the second route search server, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the route search agent server or to the terminal device.

Another aspect of the navigation system according to the sixth invention is **characterized in that** in the second route search server, when there has been a request for navigation on the basis of navigation information transmitted to the terminal device, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the terminal device.

Another aspect of the navigation system according to the sixth invention is **characterized in that** in the second route search server, an optimum route that meets the route search parameter is found by the route searching means, the navigation information editing means creates navigation information on the basis of the found optimum route data, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the route search agent server.

Another aspect of the navigation system according to the sixth invention is **characterized in that** the route search parameter includes a departure place within the first area, the first route search server is provided with route searching means and with candidate node extraction means for extracting point information of at least one candidate node reachable in another area from the first area, the route searching means of the first route search server finds optimum routes leading from the departure place to the candidate nodes and transmits the routes to the route search agent server, the route search agent server is provided with candidate node extraction means whereby, from the candidate nodes and information about optimal routes leading to the candidate nodes received from the first route search server, a candidate node leading to an area serviced by the second route search server that was determined by the server determination means is extracted, the extracted candidate node in question and information about the optimal route leading to the candidate node are transmitted to the second route search server, and when information about an optimal route from the candidate node to the destination found by the second route search server, and navigation information created on the basis of the optimal route information in question, are received from the second route search server, the optimal route information and navigation information are transmitted to the first route search server.

Another aspect of the navigation system according to the sixth invention is **characterized in that** the navigation information is composed of the key words and the navigation text, the keys words are proper names including place names and line names, and the navigation text is text for navigating a route.

Another aspect of the navigation system according to the sixth invention is **characterized in that** the second route search server is provided with route search application screen creation means for creating screens composed with XML in order to display information including the navigation information on the terminal device, the text extraction means extracts text excepting screen data included in XML and the key words from the navigation information, and prompts the translation server for translation, and the navigation information editing means combines the translated text and the key words to create translated screen data.

A seventh invention resides in a route search agent server constituting a navigation system which comprises a first route search server having a first area as a service area, a second route search server having a second area as a service area, a terminal device connected via a network to at least the first route search server in the first area, and a route search agent server connected to a plurality of route search servers,
**characterized in that**
the route search agent server is provided with server determination means for determining a route search server whose service area is an area that includes a point indicated by point information constituting a route search parameter received from the first route search server when the first route search server has received point information determined to not be the service area thereof;
the second route search server is provided with route searching means for finding an optimum route that meets the route search parameter, navigation information editing means for creating navigation information on the basis of optimum route data found by the route searching means, output language determination means for determining whether the navigation information is in the language to be output by the terminal device, and text extraction means for extracting navigation text excepting key words from the navigation information, whereby an optimum route that meets the route search parameter is found by the route searching means, whereupon the navigation information editing means creates navigation information on the basis of the found optimum route data, and transmits the information together with the optimum route data to the route search agent server;
the terminal device stores language information to be displayed; when the terminal device transmits the language information and point information constituting a route search parameter to the first route search server and requests a route search, in a case where the server determination means of the first route search server has determined, on the basis of an area including a point indicated by the point information, that the point indicated by the point information is not within the service area of the first route search server, the first route search server transmits the language information and point information constituting the route search parameter to the route search agent server to prompt a route search; and
in a case where the server determination means, on the basis of route search prompt information received from the first route search server, discriminates that the route search server having the point as the service area is the second route search server, the route search agent server transmits the language information and point information constituting the route search parameter to the second route search server, and transmits optimum route information and navigation information received from the second route search server to the terminal device.

Another aspect of the route search agent server according to the seventh invention is **characterized in that** in the second route search server, an optimum route that meets the route search parameter is found by the route searching means, the navigation information editing means creates navigation information on the basis of the found optimum route data, the output language determination means determines whether the language of the navigation information is the same as the language identified by the language information, and in a case where the language is not that same as that identified by the language information, the text extraction means extracts navigation text excepting key words from the navigation information and prompts the translation server for translation, whereupon the translation server translates the navigation text into the same language as the language information and transmits the translation to the second route search server, and the navigation information editing means of the second route search server creates translated navigation information that combines the translated navigation text and the key words, and transmits the translated navigation information to the route search agent server, whereupon the route search agent server transmits the navigation information received from the second route search server to the first route search server.

### [Effect of the Invention]

In the first invention, in the event that the language used by the terminal device and the language used by a route search server to provide service are not the same, navigation text excepting proper names such as place names, line names, and the like is translated into the language used by the terminal device, and is provided to the terminal device as navigation information in combination with key words left untranslated from the language used by the route search server, whereby the terminal device can be provided navigation with key words such as proper nouns, etc., left in untranslated form, and with information with the exception of the key words in translated to the language used by the terminal device, so that the navigation information display can be easily compared with display of proper nouns and the like on local maps and street plans.

Specifically, for example, in a case where the language used by a terminal device is a first language (e.g., English), while the language in which services are provided by a route search server in area B is a second language (e.g., Japanese), navigation information for use within area B would be composed of navigation information in which key words are left in the second language, while information besides key words is translated to the first language, whereby when the terminal device has moved to area B (an area in which the second language (Japanese) is used), navigation information for use within area B is displayed in English, while key words such as proper nouns are not translated in English but instead left in Japanese, so that correspondence to street plans (Japanese), signage, and the like displayed at the locale can be easily understood.

The second to fourth inventions provide a route search server constituting the navigation system according to the first invention; and the fifth invention provides a navigation method in the navigation system according to the first invention. The sixth invention provides a navigation system comparable to the first navigation system but using a route search agent server; and the seventh invention provides a route search agent server constituting the navigation system of the sixth invention.

### BRIEF DESCRIPTION OF THE DRAWINGS

FIG. 1 is a system configuration diagram depicting a configuration of the navigation system according to the present invention;
FIG. 2 is a system configuration diagram for describing an outline of route searching and navigation of the present invention;
FIG. 3 is a block diagram depicting the detailed configuration of a route search server and a terminal device;
FIG. 4 is a diagram depicting examples of screens created by an application that supports respectively different languages, where
FIG. 4A depicts an initial screen of a route search request created in Japanese, and FIG. 4B one created in Chinese, respectively;
FIG. 5 is a diagram depicting an example of a navigation screen, wherein FIG. 5A depicts a navigation screen in a second language (Japanese) created in a second route search server, FIG. 5B is a diagram depicting a navigation screen showing navigation information corresponding to that in FIG. 7A, in which text information with the exception of key words has been translated from a second language (Japanese) to a first language (English), and FIG. 5C is a diagram depicting a case where all of the navigation information corresponding to FIG. 5A is translated into the first language (English);
FIG. 6 is an outline diagram for describing road network data used in route searching in the present invention;
FIG. 7 is an outline diagram for describing transportation network data used in route searching in the present invention;
FIG. 8 is a flowchart depicting an operating routine of a first route search server of area A depicted in FIG. 2;
FIG. 9 is a flowchart depicting an operating routine of a second route search server of area B depicted in FIG. 2;
FIG. 10 is a flowchart depicting an operating routine according to a second embodiment of the second route search server of area B depicted in FIG. 2; and
FIG. 11 is a block diagram depicting a configuration of a route search agent server according to a third embodiment of the present invention.

### BEST MODE FOR CARRYING OUT THE INVENTION

The present invention is described in detail hereinbelow using specific examples and drawings. The examples hereinbelow are intended to present examples of a navigation system for specifying the technological concepts of the present invention and are not intended to limit the present invention to this navigation system. The examples are equally applicable to other embodiments of a navigation system included within the scope of the claims.

### [Example 1]

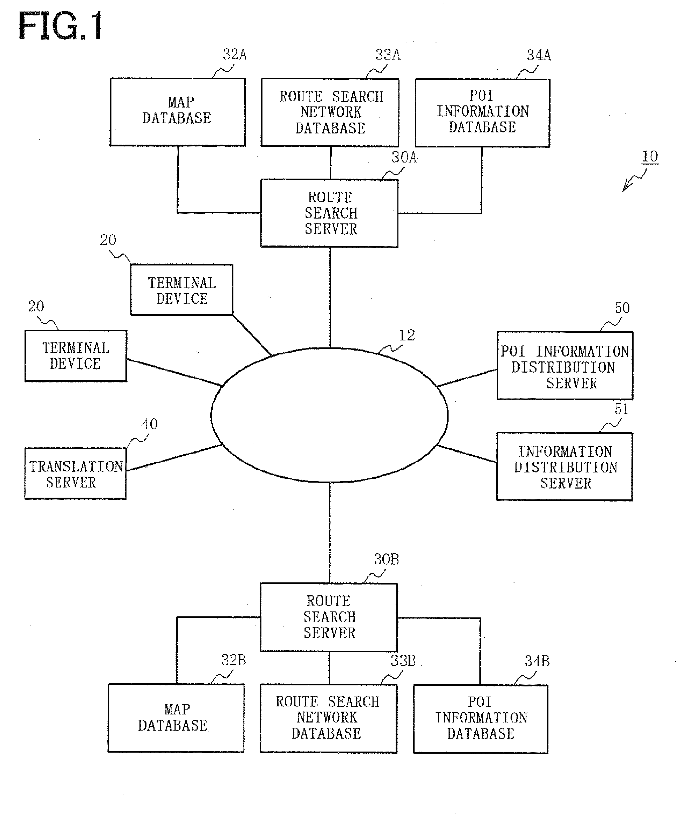

FIG. 1 is a system configuration diagram showing the configuration of a navigation system 10 according to the present invention. As depicted in FIG. 1, the navigation system 10 is provided with terminal devices 20, a first route search server 30A, a second route search server 30B, and a translation server 40, which are connected via a network 12. The first and second route search servers 30A, 30B of this navigation system 10 respectively provide route search and navigation services to areas which are specific countries or regions. The first and second route search servers 30A, 30B have only map data and route search network data covering their respective specific service areas.

The navigation system 10 comprises a POI information distribution server 50 for providing the location, service specifics, and other detailed information of POIs (points of interest) belonging to various categories, various other information distribution servers 51 for providing contents such as music and various images as well as other information, and the like. Because of this, the first and second route search servers 30A, 30B can acquire necessary data from the POI information distribution server 50 or another information distribution server 51 via the network 12, and add the data to their own databases. Likewise, first and second route search servers 30A, 30B can also transmit search requests to the POI information distribution server 50 or to another information distribution server 51, and acquire desired search results.

The navigation system 10 according to the present invention is not limited to the aforedescribed configuration, and the first and second route search servers 30A, 30B may have the function of a map distribution server for distributing maps of POI locations, in addition to their navigation function. Also, while cellular telephones can be employed as terminal devices 20, other options include PDAs, music players, portable game devices, and other such portable devices, as well as mobile personal computers (PC).

The first and second route search servers 30A, 30B shown in FIG. 1 comprise map databases 32A, 32B and network databases 33A, 33B for route search, and when a route search request comes from a terminal 20, the route search servers refer to the network databases 33A, 33B for route search and conduct a route search. Navigation information for an optimum route or candidate routes obtained from the results of the route search is then transmitted to the terminal device 20. When a request comes from a terminal 20 to retrieve a desired point or POI and acquire its map data, relevant map data is retrieved with reference to the map databases 32A, 32B, and the data is distributed to the terminal 20.

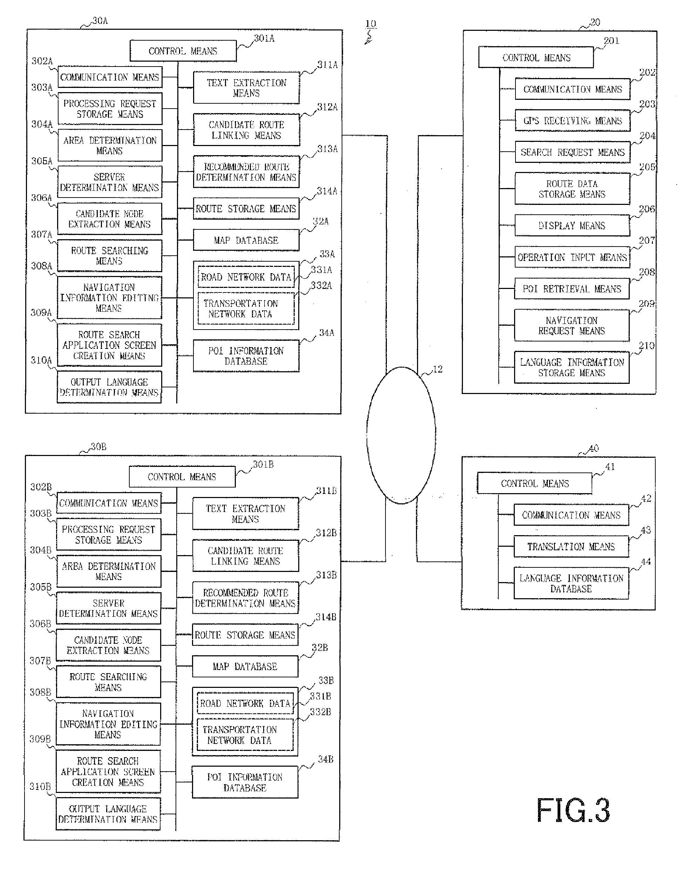

The route search network databases 33A, 33B are provided with road network data 331A, 331B (see FIG. 3) for searching for pedestrian or automobile routes; and transportation network data 332A, 332B for searching for routes for movement using transportation systems such as railways, aircraft, boats, buses, and so on. The respective sets of network data will be discussed in detail below.

Once route search parameter composed of a departure place and a destination, means of travel (walking, automobile, transportation systems, etc.), temporal parameters such as departure time, and the like are set from the terminal device 20 and a route search is requested to the first and second route search servers 30A, 30B; the first and second route search servers 30A, 30B refer to network data in the respective route search network databases 33A, 33B; find an optimum route or a plurality of candidate routes that lead from the departure place to the destination and that match the route search parameters; and create navigation information for distribution to the terminal device 20. In a case where a plurality of candidate routes are found, when a route is selected from the terminal device 20 and navigation is requested, map data, data for the selected route, and navigation data for guidance along the route in question is transmitted to the terminal device 20.

In the present invention, different route search servers that use different areas as service target areas are linked to each other, and when the departure place and destination are in areas where service is provided by different route search servers, a search can be made and guidance provided for the optimal route from the departure place to the destination as a recommended route.

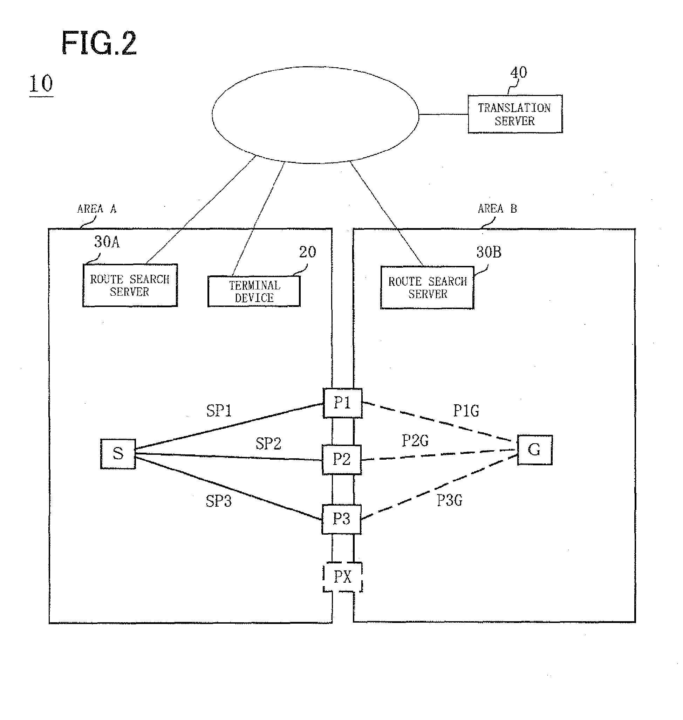

FIG. 2 is a system configuration diagram for describing a summary of route searching and navigation of the present invention using this manner of navigation server linking. In FIG. 2, area A is the service area of the first route search server 30A, and area B is the service area of the second route search server 30B. Additionally, the first route search server 30A uses a first language as the service provision language, and the second search server 30B uses a second language as the service provision language. In the description of the following example, the first language is English and the second language is Japanese.

The area A of the route search server 30A has only map data and route search network data covering area A, and the area B route search server 30B has only map data and route search network data covering area B. Therefore, the first route search server 30A cannot search for routes in which the departure place or destination is a point within area B, and the second route search server 30B cannot search for routes in which the departure place or destination is a point within area A.

In the present invention, when a terminal 20 at a position in area A sends to the first route search server 30A a route search request encompassing an area in which the departure place S is a point within area A and the destination G is a point within area B, the first route search server 30A and the second route search server 30B are linked in the following manner, and an optimal route from the departure place S to the destination G is determined as a recommended route and provided as guidance to the terminal 20.

When a user specifies a departure place S and a destination G and requests a route search in the terminal device 20, the terminal device 20 transmits to the first route search server 30A the departure place S, the destination G, and information stored by the terminal device 20 and indicating the language to be displayed by the display means of the terminal device 20, and requests a route search. Here, let it be assumed that the display language of the display means of the terminal device 20 is the first language (English), which is the same as the service provision language of the first route search server 30A. In a case where the destination G is a point outside of area A and within area B, the first route search server 30A finds links of means of travel connecting area A and area B; extracts one or a plurality of candidate nodes P1 to P3; finds optimum routes (the routes whereby the total link costs of the routes will be minimal) from the departure place S to the respective candidate nodes P1, P2, P3; and designating these as candidate routes SP1, SP2, SP3, derives the total link cost (required time; thereof.

The first route search server 30A sends point information of the destination G, point information of the candidate nodes P1 to P3, required times for the candidate routes, and language information (English), to the second route search server 30B whose service area is area B where the destination G is located. The second route search server 30B searches for the optimal routes (the routes whereby the total link costs of the routes will be minimal) from the candidate nodes P1 to P3 to the destination G and searches for the candidate routes P1G, P2G, P3G on the basis of the point information of the candidate nodes P1 to P3 and the point information of the destination G.

The second route search server 30B combines (adds) the total link costs (required times) of the candidate routes SP1, SP2, SP3 searched by the first route search server 30A with the total link costs (required times) of the candidate routes PING, P2G, P3G within the candidate nodes P1 to P3, and determines that the recommended route is the optimal route whose total link cost (total required time) from the departure place S to the destination G is the lowest. Hereinbelow as an example is a description of a case of a minimal total link cost (total required time) of the candidate route SP2 and the candidate route P2G joined by the candidate node P2.

On the basis of route data of the candidate route P2G within area B, the second route search server 30B creates navigation information in the second language (Japanese), and creates link information for the terminal device to access this navigation information. The created link information is transmitted to the first route search server 30A together with information indicating that the recommended route is a route composed of the candidate route SP2 and the candidate route P2G.

When the first route search server 30A receives from the second route search server 30B the link information relating to the candidate route P2G and information indicating that the recommended route is the candidate route SP2, navigation information is created on the basis of route data of the candidate route SP2 in area A. Next, the first route search server 30A transmits the created navigation information within area A and the link information received from the second route search server 30B to the terminal device 20.

When, based on the link information for accessing the navigation information in area B received from the first route search server 30A, the terminal device 20 makes a navigation request to the second route search server 20, the second route search server 30B assesses whether the language (Japanese) of the navigation information that was created on the basis of the candidate route P2G is the same as the first language (English) identified by the language information that was received from the terminal device 20. If the language of the navigation information is the same as the language of the language information of the terminal device 20, the navigation information is transmitted in unmodified form to the terminal device 20.

In a case where the language of the navigation information is not the same as the language of the language information, navigation text excepting preregistered key words, such as place names, line names, vehicle names, and so on, is extracted from the navigation information that was created in the second route search server 30B, and is sent to the translation server 40 which is prompted for translation thereof into the language of the language information received from the terminal device 20 (the first language: English). During this process, as a result having removed the key words, there is a risk of translation being carried out inappropriately without regard to continuity of context between preceding and succeeding sentences in the navigation text, and therefore it is acceptable to prompt translation, such that respectively corresponding replacement words are inserted into sections where key words were removed. Also, information for discerning key words that are not to be translated may be transmitted to the translation server.

The navigation text having been translated by the translation server 40 into the language of the language information received from the terminal device 20 (the first language: English) is transmitted to the second route search server 30B. The second route search server 30B removes the replacement words, etc., and restores the key words into the navigation text that was translated into English, i.e., the first language; combines these with the place names, line names, vehicle names, and so on which were left in Japanese, i.e., the original second language, to edit the translated navigation information; and transmits the information to the terminal device 20.

When, based on the point information of the destination G received from the first route search server 30A, the second route search server 30B extracts a candidate node PX different from the candidate nodes P1 to P3 extracted by the first route search server 30A, the second route search server 30B preferably sends point information of the candidate node PX to the first route search server 30A, requests that an additional search be made for the optimum candidate route from the departure place S to the candidate node PX, extracts the link cost (required time) of this candidate route from the first route search server 30A, and adds this new candidate route to the other candidate route to determine an ultimate recommended route when the recommended route is determined in the first route search server 30A.

During creation of navigation information or of link information for accessing this navigation information, the second route search server 30B refers to the map database 32B to acquire map data corresponding to the navigated route in question, and creates link information for referring to this map data from the terminal device 20. Then, during transmission of the link information of the navigation information to the terminal device 20 via the first route search server 30A, the link information for referring to this map data is transmitted as well. Or, during transmission of translated navigation information to the terminal device 20 in response to a navigation information acquisition request from the terminal device 20, the link information for referring to the above-described map data may be transmitted to the terminal device 20 at the same time. In so doing, map data can be transmitted only when there is a request from a user, and unnecessary transmission of data can be prevented.

Although the candidate nodes shown in FIG. 2 are shown herein as specified points, area A and area B are adjacent on land, the candidate nodes joining area A and area B together are points of the area border if the movement means is an automobile or a railroad, and can be specified as the point information on the candidate node as shown by P1 to P3 in FIG. 2, but this is not always the case.

For example, in cases in which the movement means between areas is a route that uses an aircraft or a route that uses a boat, two candidate points will be the node in area A and the node in area B that are the nodes at the ends of the link that joins the areas together and designates an aircraft or boat as the movement means. In cases in which the departure place S is in area A and the destination G is in area B as in FIG. 2, the point information of the candidate node sent from the first route search server 30A in area A to the second route search server 30B in area B is an airport or harbor which is the destination node of an aircraft link or boat link, and the point information of the candidate node of the first route search server 30A of area A is an airport or harbor which is the departure place node of an aircraft link or boat link. In this case, the total cost of the recommended route of course includes the required time of the aircraft or boat link.

In the first route search server 30A, in order to specify the destination G positioned within the range of area B provided with service by the second route search server 30B, position information on the destination G must be specified in the first route search server 30A. In this case, the configuration is preferably designed so that the first route search server 30A does not need to have the map data of area B, and POI retrieval is conducted, of the names of cities, prominent establishments, and the like within the range of area B to acquire the position information thereof. POI information can be acquired from the POI information distribution server 50 (see FIG. 1) and stored in the POI information database 34A.

Because the POI information database 34A of the first route search server 30A contains information about major facilities such as airports, harbors, and the like as POI information for foreign countries and areas outside of area A, the first route search server 30A can extract airports or harbors near a specified destination G as candidate nodes.

Next, the detailed configuration of a navigation system according to the present invention will be described. FIG. 3 is a block diagram depicting the detailed configuration of a route search server, a translation server, and a terminal device.
The terminal device 20 is a terminal adapted to receive a navigation service, and is provided with control means 201 for overall control of operations of the parts, communication means 202, GPS receiving means 203, search request means 204, route data storage means 205, display means 206, operation input means 207, POI retrieval means 208, navigation request means 209, language information storage means 210, and so on. The operation input means 27 is configured from character input keys, selection keys, cursor keys for selecting setting items and the like on a menu screen displayed on a display screen, and other components. The language information storage means 210 stores data that, in the present embodiment, indicates "English" as the first language.

As described previously, the route search servers 30A, 30B are provided with map databases 32A, 32B which respectively collect map data; with route search network databases 33A, 33B which collect road network data 331A, 331B and transportation network data 332A, 332B for route searches; and with POI information databases 34A, 34B for collecting POI names and position information. In a case where the route search servers 30A, 30B have a function of finding routes that utilizes walking or transportation systems and of guiding the terminal device 20, the route search servers 30A, 30B will use the road network data 331A, 331B and the transportation network data 332A, 332B to find the routes.

In the present embodiment, because the route search servers 30A, 30B respectively have the same configuration, only the first route search server 30A is described here, omitting description of the second route search server 30B. Elements assigned the same name in both the first and second route search servers 30A, 30B have the same function.

The first route search server 30A is provided with control means 301A for overall control of operations of the parts, communication means 302A, processing request storage means 303A, area determination means 304A, server determination means 305A, candidate node extraction means 306A, route searching means 307A, navigation information editing means 308A, route search application screen creation means 309A, output language determination means 310A, text extraction means 311A, candidate route linking means 312A, recommended route determination means 313A, route storage means 314A, etc.

The translation server 40 is provided with control means 41 for overall control of operations of the parts, communication means 42, translation means 43, a language information database 44, etc.

First, the terminal device 20 specifies a departure place and a destination, as well as route search parameters such as means of travel, etc., and transmits a route search request to the first route search server 30A. Language information indicating a language for display by the display means 206 is stored in the language information storage means 210 of the terminal device 20. When the terminal device 20 requests a route search, this language information is transmitted as a route search parameter to the first route search server 30A. Here, the language information indicates that English is the first language, which is the same as the service provision language of the first route search server 30A.

When the first route search server 30A receives the route search request from the terminal device 20, the route search parameters contained in the route search request, such as the point information about the departure place and destination, means of travel, and language information for display by the terminal device 20, are temporarily stored in the processing request storage means 303A. Next, the area determination means 304A determines whether or not the departure place and the destination included in the route search request parameters stored in the processing request storage means 303A are a point within the service area of the first route search server 30A.

In a case where it has been determined that the departure place and destination are points within the service area of the first route search server 30A, the route searching means 307A refers to the route search network database 33A in accordance with the route search parameters contained in the route search request, and carries out a normal route search from the departure place to the destination. A plurality of found candidate routes are stored in the route storage means 314A. The recommended route determination means 313A then determines an optimum recommended route from among the routes stored in the route storage means 314A, whereupon the navigation information editing means 308A creates navigation information relating to the recommended route, and distributes this to the terminal device 20 through the communication means 302A.

A route search parameter specification screen, a route search request screen, a navigation request screen, etc. for display on the terminal device 20 are created by the route search application screen creation means 309 on the basis of an application (a navigation application) provided by the route search server 30A. In a case where the terminal device 20 receives a navigation service from the route search server 30A, this application will have been downloaded in advance from the route search server 30A. The screens are created with XML data by the application.

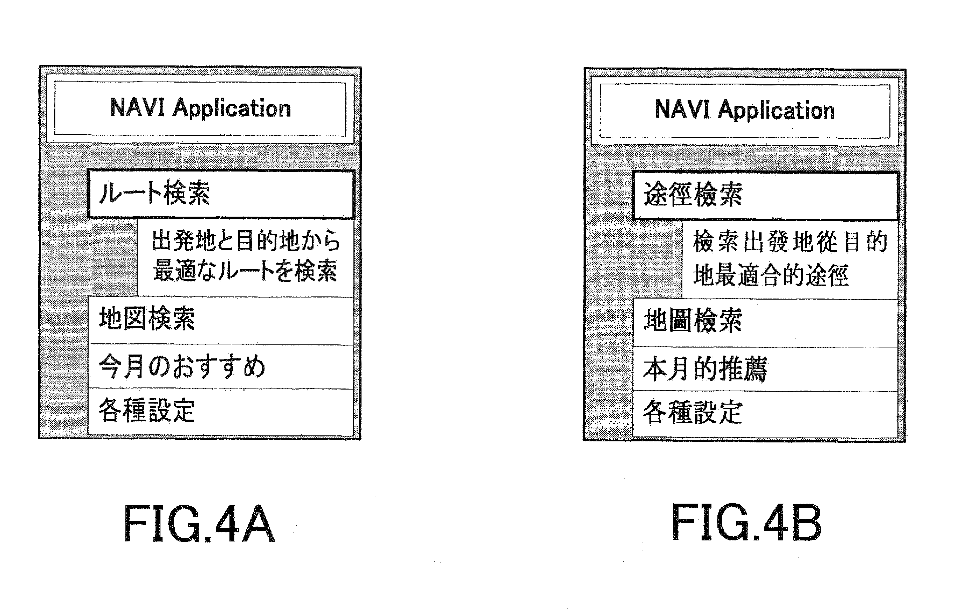

FIG. 4 is a diagram depicting examples of screens created by an application that supports respectively different languages, where FIG. 4A depicts an initial screen of a route search request created in Japanese, and FIG. 4B one created in Chinese, respectively. A "Route Search" selection field for specifying a departure place and a destination and searching for an optimal route, and a "Map Search" selection field for displaying maps, are displayed on the respective screens, and the user can select these selection fields to transmit desired requests to the route search server 30A or to the route search server 30B.

During a route search request from the terminal device 20, in a case where, for example, the departure place is within the service area of the first route search server 30A like the departure place S in FIG. 2, the destination is a point within the service area of the second route search server 30B like destination G, and the terminal device 20 is within the service area of the first route search server 30A, the route search and navigation of the optimum recommended route are carried out as follows.

First, the area determination means 304A of the first route search server 30A determines whether the departure place S and the destination G lie within the service area of the first route search server 30A. As a result, it is determined that the departure place S lies within the service area of the first route search server 30A. On the other hand, because it is determined that the destination lies outside the server area, in this case, the server determination means 305A identifies a route search server whose service area is the area that contains the destination G. Here, it is determined that the second route search server 30B is a route search server whose service area is an area that includes the destination G.

Next, the candidate node extraction means 306A of the first route search server 30A extracts one or more candidate nodes (P1 to P3 in FIG. 2, for example) that connect the area where the destination G is located from the area where the departure place S is located. When the candidate nodes are extracted, the route searching means 307A searches for optimal routes connecting the departure place S and the candidate nodes (P1 to P3) together and designates these routes as candidate routes (SP1 to SP3 in FIG. 2), and data and link costs (required times) of the respective candidate routes are stored in the candidate route storage means 314A.

Next, point information (location information) for the candidate nodes (P1-P3), total link cost (required time) for each candidate route, point information about the destination, and language information received from the terminal device 20 (here, data indicating "English" as the first language) are transmitted to the second route search server 30B having the area where the destination G is located as its service area, prompting a search for candidate routes from the candidate nodes to the destination G.

The second route search server 30B whose service area is the area where the destination G is located stores the point information (location information) for the candidate nodes (P1-P3), the total link cost (required time) for each candidate route, and the language information (data indicating "English" as the first language) which have been received from the first route search server 30A in the processing request storage means 3038. Next, the route searching means 307B of the second route search server 30B refers to the point information about the candidate nodes (P1-P3) and the destination G stored in the processing request storage means 303B, and refers to the route search network database 33B to carry out a route search from the candidate nodes (P1-P3) to the destination G, saving the information and link costs for the found candidate routes in the route storage means 314B.

Next, the candidate route linking means 312B of the second route search server 30B either links the candidate routes that were respectively found by the first and second route search servers 30A, 30B or links the link costs thereof; whereupon the recommended route determination means 313B determines an optimum route as the recommended route from among these linked candidate routes, and deletes the information about the other candidate routes. The recommended route is the route whose total link cost (required time) is the lowest, for example.

Once the recommended route has been determined, the navigation information editing means 308B of the second route search server 30B creates navigation information on the basis of the data of the recommended route so determined, and stores the information in the route storage means 314B. The navigation information editing means 308B additionally creates link information for accessing this navigation information, and transmits this to the first route search server 30A together with information about the candidate route that was selected as the recommended route within the service area of the second route search server 30B.

When the first route search server 30A receives from the second route search server 30B the link information relating to the candidate route P2G and the information indicating the candidate route SP2 as the recommended route, it creates navigation information on the basis of the route data of the candidate route SP2 in area A. Next, the first route search server 30A transmits the created navigation information for use within area A and the link information that was received from the second route search server 30B to the terminal device 20. On the basis of the navigation information received from the first route search server 30A, the terminal device 20 can request to be provided with navigation from the first route search server 30A while located within area A or, in the case of having traveled to within area B, can request to be provided navigation by the second route search server 30B, and be provided navigation within the respective areas.

When the terminal device 20 makes a navigation request to the second route search server 30B on the basis of link information for accessing the navigation information in area B that was received from the first route search server 30A, in the second route search server 30B, the output language determination means 310B determines whether the created navigation information is in the same language as that identified by the language information that was received from the terminal device 20. If the language of the navigation information is the same as the language of the language information received from the terminal device 20, link information for accessing the created navigation information and map data relating to this navigation information is created and is transmitted by the communication means 302B to the terminal device 20 that originated the navigation request.

In a case where the language of the created navigation information is different from the language identified by the language information that was received from the terminal device 20, the text extraction means 311B extracts navigation text from the screen data contained in XML and the navigation information, with the exception of key words which are proper names such as place names, line names, etc., and transmits the text together with the language information received from the terminal device 20 to the translation server 40, prompting translation to the language of the language information in question. In the present embodiment, the created navigation information is in the second language which is the service provision language of the second route search server 30B, whereas the language of the language information is the first language, and therefore the text extraction means 311B extracts the navigation text from the screen data contained in XML and the navigation information, and prompts the translation server 40 to translate into the second language.

In the translation server 40, once the navigation text to be translated and the language information to be displayed on the terminal device 20 have been received from the second route search server 30B, the translation means 43 translates the navigation text to the language of the above-described language information (the first language) while referring to the language information database 44. The translated navigation text is then transmitted to the second route search server 30B via the communication means 42.

Once the second route search server 30B receives the translated navigation text from the translation server 40, the navigation information editing means 308B combines the navigation text that was translated into the language of the above-described language information (the first language) with the key words which are proper names such as place names, line names, etc., and which were left untranslated in the original language (the second language), and edits the translated navigation information. The created navigation information, together with the recommended route information and link information created for accessing map data relating to the navigation information in question, is transmitted by the communication means 302B to the terminal device 20 that originated the navigation request.

Consequently, while located within area A, the terminal device 20 is able to request to be provided navigation by the first route search server 30A, and to be provided navigation in the first language (English). Then, in a case of having traveled to within area B, the terminal device 20 is able to request to be provided navigation by the second route search server 30B, and to be provided navigation using navigation information that has been translated into the first language (English), except for key words such as proper nouns, etc. (which are in the second language, i.e., Japanese).

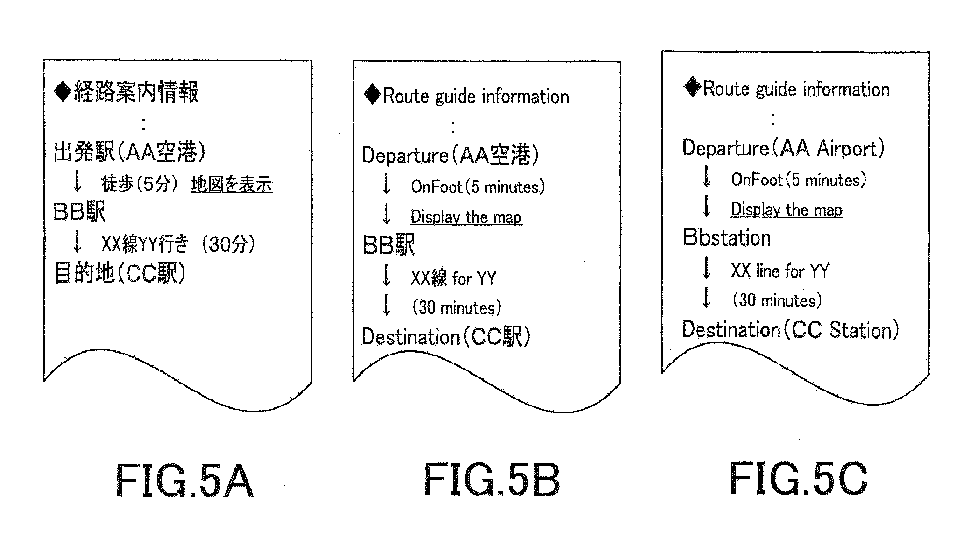

FIG. 5 is a diagram depicting an example of a navigation screen, wherein FIG. 5A depicts a navigation screen in a second language (Japanese) created in the second route search server, and FIG. 5B is a diagram depicting a navigation screen showing navigation information corresponding to that in FIG. 5A, in which text information with the exception of key words are translated from the second language (Japanese) to the first language (English). In FIG. 5A, all text information, including proper nouns such as AA Airport, BB Station, CC Station, and so on are displayed in Japanese, whereas in FIG. 5B, the key words in FIG. 5A (AA Airport, BB Station, CC Station) are not translated, while other text information is displayed translated into English. FIG. 5C is a diagram depicting a case where all of the navigation information of FAG. 5A is translated into the first language (English).

Where display is carried out in this manner, when the terminal device 20 having the first language (English) as its used language travels to area B (an area using the second language (Japanese)), navigation information for use within area B can be displayed in English, while key words such as proper nouns, etc., are not translated to English but left in Japanese, and therefore correspondence to street plans (Japanese), signage, and the like displayed at the locale can be easily understood. In a case where all information is translated to English as depicted in FIG. 5C, in the second language area, it would be necessary for the user to discern correspondences between the Japanese notation displayed on signage for railway stations, buildings, roads, etc., and the English notation of the navigation information, thus posing an inconvenience.

Herein is described a common method of searching for routes including movement routes that use transportation systems. Stored in the network databases 33A, 33B for route search of the route search servers 30A, 30B are the road network data 331A, 331B for searching for movement routes that use walking or automobiles, and the transportation network data 332A, 332B for searching for movement routes that use public transportation systems. These route searching means 307A, 307B refer to the network databases 33A, 33B for route search and search for a route that uses walking or automobiles or a route that uses both walking and transportation systems.

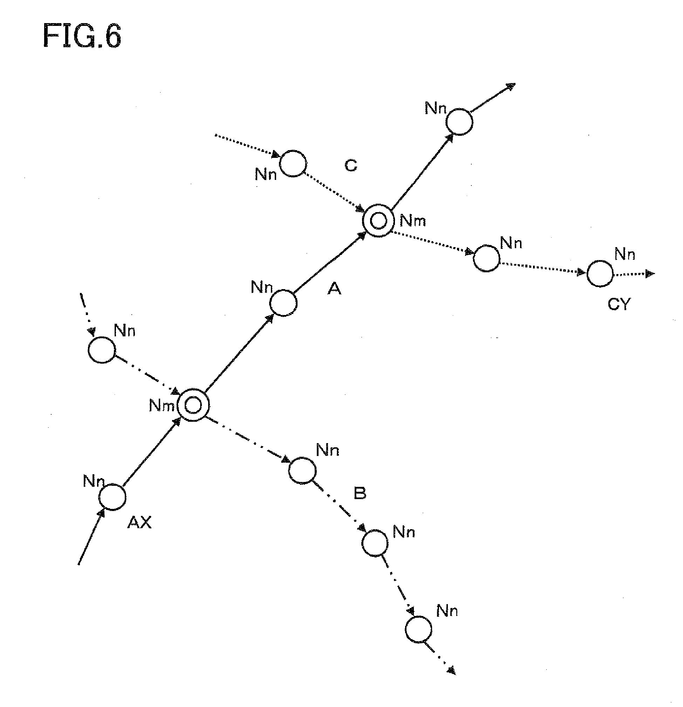

The road network data 331A, 331B is configured as follows. For example, in a case in which the road consists of roads A, B, and C as shown in FIG. 6, the end points, intersection points, turning points, and other such features of the roads A, B, and C are designated as nodes, the roads connecting the nodes together are represented as links having direction, and the road is configured from node data (latitude and longitude of nodes), link data (link numbers), and link costs data in which the data is the link cost of the links (the link distance or the required time needed in order to travel the links).

That is, in FIG. 6, the letters Nn (the symbol o) and Nm (the symbol Ⓞ) indicate nodes, and Nm (the symbol Ⓞ) indicates an intersection point between roads. Links having direction and connecting nodes together are shown as arrow lines (solid lines, dotted lines, and double-dotted lines). Among links, there are links which indicate upward and downward sloping of roads, but for the sake of simplifying the drawing in FIG. 6, only links of arrow directions are shown.

In cases in which a route search is performed using this manner of road network data as a route search database, the links connecting from the departure place node to the destination node are traversed, their link costs are totaled, the route having the smallest total link cost is searched, and guidance is provided. Specifically, in a case in which the departure place is the node AX and the destination is the node CY in FIG. 6 and a route search is performed, road A is traveled from node AX, a right turn is made at the second intersection point onto road C, the links leading to node CY are traversed in sequence, the link costs are totaled, the route having the smallest total value of link costs is searched, and guidance is provided.

No other routes leading from node AX to node CY are shown in FIG. 6, but since other such routes actually do exist, multiple routes whereby node CY can be reached by node AX are similarly searched, and of these routes, the route having the smallest link cost is determined to be the optimal route. This method is performed by a conventional method known as the Dijkstra method, for example.

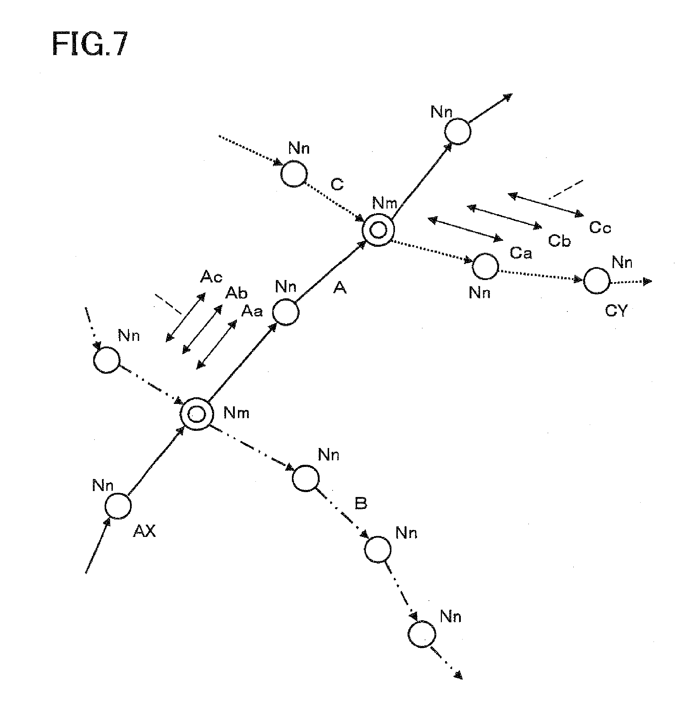

The transportation network data 332A, 332B for conducting a route search of transportation systems is configured as follows. For example, in a case of the transportation lines A, B, and C such as is shown in FIG. 7, the stations provided at the transportation lines A, B, and C (airports in lines of aircraft) are designated as nodes, the sections joining the nodes together are represented as links having direction, and node data (latitude and longitude) and link data (link numbers) are designated as network data. In FIG. 7, the letters Nn (the symbol o) and Nm (the symbol Ⓞ) indicate nodes, where Nm (the symbol Ⓞ) indicates a connection point (a transfer station or the like) of a transportation line, and links having direction and connecting nodes together are indicated by arrow lines (solid lines, dotted lines, and double-dotted lines). Among links, there are links which indicate upward and downward sloping of roads, but for the sake of simplifying the drawing in FIG. 7, only links of arrow directions are shown.

However, the link costs of a transportation network are fundamentally different from those of a road network. That is, link costs in a road network have been fixed and static, whereas in a transportation network, there are numerous trains and aircraft traveling the transportation lines as shown in FIG. 7 (the routes of individual trains, aircraft, and the like are hereinbelow referred to as "transportation means"). There are cases in which the departure time from a node and the arrival time at the next node are established for each transportation means (defined as time schedule data and operation data) and individual routes are not necessarily linked at adjacent nodes. For example, there are cases such as express trains and local trains. In such cases, a plurality of different links exist on the same transportation line, and there are cases in which the required times between nodes differ depending on the transportation means.

In the transportation network shown in FIG. 7, there is a plurality of transportation means (routes) Aa to Ac... on the same link of the transportation line A, and a plurality of transportation means (routes) Ca to Cc... on the transportation line C. Therefore, in an operation network of a transportation system, unlike a simple road network, the quantity of data including nodes, links, and link costs is proportionate to the total number of transportation means (routes of individual aircrafts, trains, and the like).

To search for a route from a certain departure place to a certain destination using this manner of transportation network data, all of the transportation means which can be used (ridden) to reach the destination from the departure place must be searched and a transportation means that conforms to the search conditions must be specified.

For example, in FIG. 7, in a case in which a route search is performed wherein a specified departure time is designated with the node AX of the transportation line A as the departure place and the node CY of the transportation line C as the destination, all of the transportation means that depart at or after the departure time from among the transportation means Aa to Ac... operating on the transportation line A are selected in sequence as routes at the time of departure. Based on the arrival time at the connection node on the transportation line C, a search is conducted of a combination of all the transportation means from the arrival time onward which can be boarded at the connection node from among the transportation means Ca to Cc... operating on the transportation line C, the required times, number of boardings, and other parameters of the routes are totaled, and guidance is provided.

Using this manner of network data, the route search servers 30A, 30B search a plurality of candidate routes from the departure place to the destination in accordance with the route search conditions and designate the results as candidate routes. If the departure time from the departure place is specified in the route search conditions, the arrival time at the destination is included in the guidance route data, or if the arrival time at the destination is specified, and the departure time from the departure place for arriving at the destination at the specified time is included.

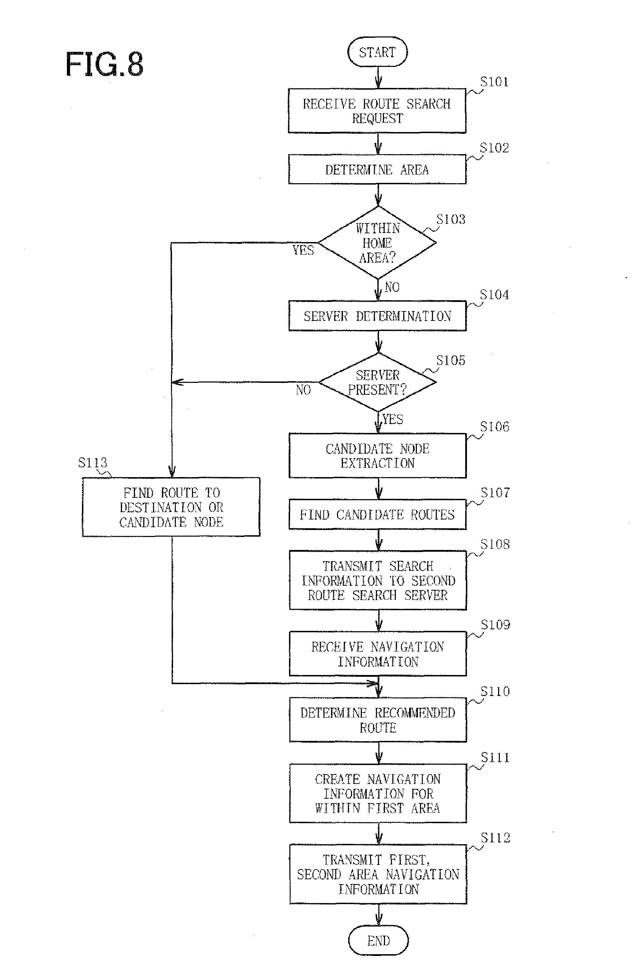

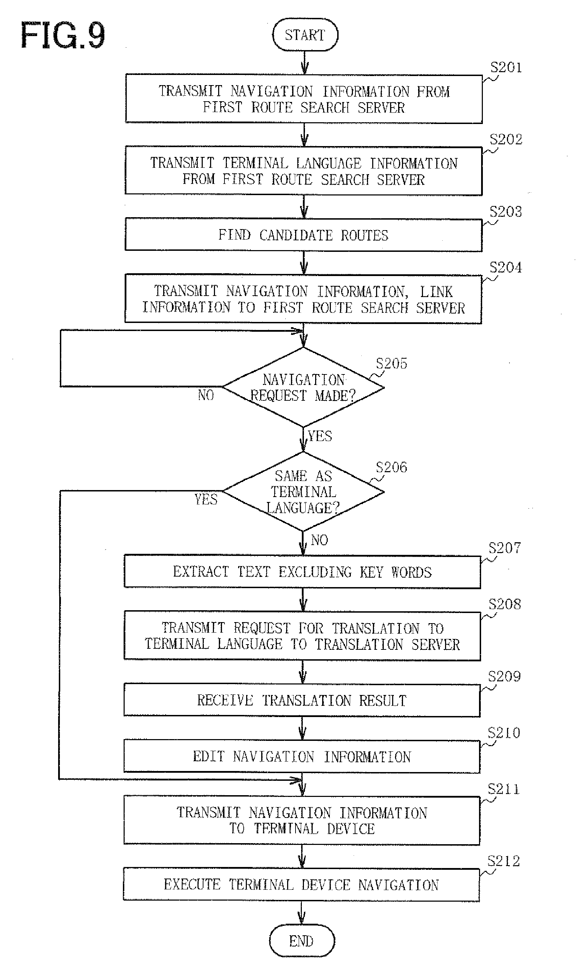

Next, the operation sequence of the navigation system according to the example of the present invention will be described in detail with reference to the flowcharts shown in FIGS. 8 and 9. FIG. 8 is a flowchart depicting operation in the first route search server of the navigation system according to the embodiment of the present invention. FIG. 9 is a flowchart depicting operation in the second route search server of the navigation system according to the embodiment of the present invention.

In Step S101, the first route search server 30A receives from the terminal device 20 a route search request that includes route search parameters such as departure place, destination, and language information to be displayed on the display means 206 of the terminal device 20. The first route search server 30A temporarily stores the received route search parameters in the processing request storage means 303A. Next, in Step S102, the area determination means 304A determines whether the destination lies within the service area of the first route search server 30A (within its own area). In Step S103, if determined that the destination does not lie within the service area of the first route search server 30A, the system advances to the process of Step S104, and the server determination means 305A identifies a route search server whose service area is an area that includes the destination.

In Step S105, in the case of a determination that a route search server having the destination as its service area does exist, the process advances to the next Step S106. Here, for the purposes of the following description, it is assumed that an area containing the destination is a server that corresponds to the service area of the second route search server.

In Step S106, the candidate node extraction means 306A of the first route search server 30A extracts one or a plurality of candidate nodes connecting the area where the departure place is located to the area where the destination is located. Next, in Step S107, the route searching means 307A of the first route search server 30A finds optimum routes linking the departure place with the respective candidate nodes, designates these as candidate routes, and stores data and link costs (required time) for the respective candidate routes in the route storage means 314A.

Next, in Step S108, point information about the candidate nodes, total link costs (required time) for the candidate routes, point information about the destination, and language information received from the terminal device 20 are transmitted to the second route search server 30B whose service area is the area where the destination is located, prompting a search for candidate routes from the candidate nodes to the destination.

In the second route search server 30B, candidate routes from the candidate nodes to the destination are found, the found candidate routes are linked, and an optimum route from among the linked candidate routes is determined as a recommended route. Next, in the second route search server 30B, navigation information is created from the recommended route data in a manner that will be discussed in detail later, and the information is transmitted to the first route search server 30A.

In Step S109, the first route search server 30A receives the navigation information from the second route search server 30B and stores it in the route storage means 314A. In Step S110, a recommended route is determined from the candidate routes within the service area of the first route search server 30A; and in Step S111, the navigation information editing means 308A creates navigation information within the service area of the first route search server 30A, and stores the information in the route storage means 314A. Next, the distribution data editing means 315A edits the created navigation information to a format distributable to the terminal device 20, and in Step S112 the information is transmitted to the terminal device 20 via the communication means 302A, whereupon the process terminates.

In the above-described Step S103, in a case where the point information of the destination included in the route search parameters is a point lying within the service area of the first route search server 30A, or where, in Step S105, a route search server having an area to which the destination belongs as its service area does not exist, the system advances to the process of Step S113, whereupon the route search means 307A of the first route search server 30A conducts a route search from the departure place to the destination located within the service area of the first route search server 30A, or the candidate node extraction means 306A extracts candidate nodes leading to outside the service area of the first route search server 30A, the route search means 307A finds candidate routes leading from the departure place to the candidate nodes, and these are stored in the route search means 314A.

Next, in Step S110, the recommended route determination means 313A determines an optimum route from among the candidate routes as a recommended route. Next, in Step S111, navigation information relating to the recommended route is created by the navigation information editing means 308A and is converted by the distribution data editing means 315A to a data formate distributable to the terminal device 20, then in Step S612 the navigation data is transmitted to the terminal device 20 via the communication means 302A.

While in the case described above, the destination included in the route search parameters is located within the service area of the first route search server 30A, while the destination is located within the service area of the second route search server 30B, the present invention is not limited to the above-described example, it being acceptable, for example, for the terminal device 20, while in the service area of the first route search server 30A, to identify points within the service area of the second route search server 30B as the departure place and the destination, and to request a route search from the first route search server 30A.

In this case, after a route search server having the area to which the departure place and the destination belong as its service area is determined, route search parameters including the departure place, destination, and language information is transmitted to the route search server having that area as its service area, prompting a route search.

Next, making reference to the flowchart of FIG. 9, the processing routine of the second route search server 30B in response to processing by the first route search server 30A described in the flowchart of FIG. 8 is described. In Step S201, the first route search server 30A transmits route search information (a request) including point information about the destination, candidate node information, and information for candidate routes within area A to the second route search server 30B. Next, in Step S202, the first route search server 30A transmits the language information of the terminal device to the second route search server 30B.

In the process of Step S203, the second route search server 30B finds candidate routes from the candidate nodes to the destination, links the found candidate routes, determines an optimum route from among the linked candidate routes as a recommended route, and creates navigation information. The language of the navigation information created at this time is the language of the second route search server 30B (the second language: Japanese). Next, in Step S204, together with the navigation information, route information and link information for requesting navigation from the second route search server 30B, i.e., link information for the terminal device 20 to access the navigation information, are transmitted to the first route search server 30A.

In Step S205, the second route search server 30B determines whether there has been a request for navigation from the terminal device 20. If there has not been a request for navigation from the terminal device 20, the process of Step S205 is repeated. If there has been a request for navigation from the terminal device 20, in Step S206, on the basis of the language information of the terminal device 20, it is determined whether the language of the second route search server 30B and the language to be displayed on the terminal device 20 are the same. If the languages are different (not the same), in Step S207, the navigation text, excepting key words which are proper names such as place names or line names, is extracted from the navigation information provided to the terminal device 20, and in Step S208 the translation server 40 is requested for translation into the language to be displayed in the terminal device 20.

In Step S209, once the translated result is received from the translation server 40, then in the second route search server 30B, in Step S210, translated navigation information which combines the translated navigation text and the untranslated key words is edited; and in Step S211, route information and link information for requesting navigation from the second route search server 30B, i.e., link information for the terminal device 20 to access the navigation information, are transmitted to the terminal device 20, whereupon navigation is carried out in Step S212, and when navigation terminates, the process is terminated.

By carrying out processing in this manner, when a terminal device 20 that uses a first language (English) moves to area B (an area where the second language (Japanese) is used), navigation information for use within area B can be displayed in English, while key words such as proper nouns, etc., are not translated to English but left in Japanese (see FIG. 5B), and therefore correspondence to street plans (Japanese), signage, and the like displayed at the locale can be easily understood.

### [Second Embodiment]

In the processing routine of FIGS. 8 and 9, the second route search server 30B transmits untranslated navigation information to the terminal device 20 via the first route search server 30A, and at the point in time that the terminal device 20 travels into area B, and on the basis of navigation information requests navigation from the second route search server 30B, navigation information for use within area B is translated and transmitted to the terminal device 20 to execute navigation.

However, this routine is premised on the condition that roaming is enabled when the terminal device 20 travels to area B, specifically, that within area B the terminal device 20 is able to access the second route search server 30B and transmit location information to the second route search server 30B, and to download the necessary information from the second route search server 30B. The routine dictates that, in a case where the language of the second route search server 30B and the language to be displayed on the terminal device 20 are not the same, navigation information created by the second route search server 30B is translated and transmitted to the first route search server 30A in advance. According to this procedure, translated navigation can be acquired in advance irrespective of whether roaming of the terminal device 20 in area B is possible.

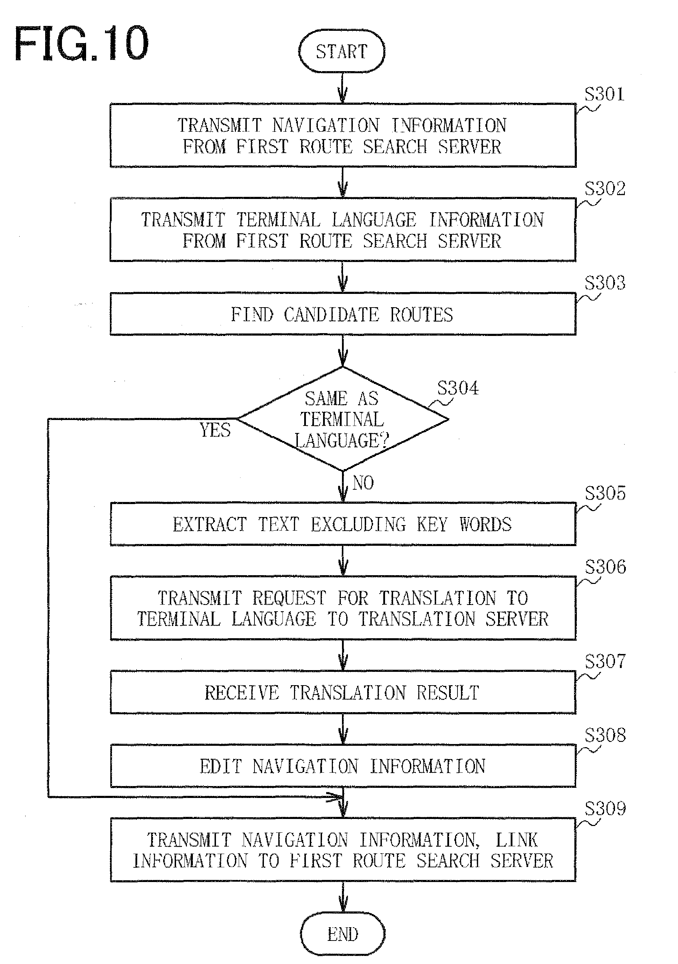

FIG. 10 is a flowchart depicting a processing routine of the second route search server 30B in a case where the language of the second route search server 30B and the language to be displayed on the terminal device 20 are not the same, and a routine whereby the second route search server 30B translates navigation information and transmits it to the first route search server 30A in advance is taken. In Step S301, the first route search server 30A transmits route search information (a request) including point information about the destination, candidate node information, and information for candidate routes within area A to the second route search server 30B. Next, in Step S302, the first route search server 30A transmits the language information of the terminal device to the second route search server 30B (see FIG. 8, Step S108).

In the process of Step S303, the second route search server 30B finds candidate routes from among the candidate nodes to the destination, links the found candidate routes, determines an optimum route from among the linked candidate routes as a recommended route, and creates navigation information. The language of the navigation information created at this time is the language of the second route search server 30B (the second language: Japanese). Next, in Step S304, on the basis of the received language information for the terminal device, the second route search server 30B determines whether the language of the second route search server 30B and the language to be displayed on the terminal device 20 are the same. If the languages are different (not the same), in Step S305, the navigation text, excepting key words which are proper names such as place names or line names, is extracted from the navigation information that was created from the recommended route data, and in Step S306 the translation server 40 is requested for translation into the language to be displayed in the terminal device 20.

In Step S307, once the translated result is received from the translation server 40, then in the second route search server 30B, in Step S308, the translated navigation information combining the translated navigation text and the untranslated key words is edited; and in the process of Step S309, route information and link information for requesting navigation from the second route search server 30B, i.e., link information for the terminal device 20 to access the navigation information, are transmitted together with the edited navigation information to the first route search server 30A, whereupon the process is terminated.

On the other hand, in a case where the language of the second route search server 30B and the language to be displayed on the terminal device 20 are determined to be the same in the language determination process of Step S304, in Step S309, the navigation information created from the recommended route data is transmitted in untranslated form, together with the route information and the link information, from the second route search server 30B to the first route search server 30A, whereupon the process is terminated. The navigation information etc. received by the first route search server 30A from the second route search server 30B by the above-described process is combined with navigation information for use within area A found by the first route search server 30A, and is transmitted to the terminal device 20 (see FIG. 8, Step S112).

Consequently, while located within area A, the terminal device 20 is able request to be provided navigation by the first route search server 30A and to be provided navigation in the first language (English). Then, in a case of having traveled to within area B, the terminal device 20 is able to request to be provided navigation by the second route search server 30B, and to be provided navigation using navigation information that has been translated into the first language (English), except for key words such as proper nouns, etc. (which are in the second language, i.e., Japanese). According to the routine of this second embodiment, the terminal device 20 can acquire translated navigation for use within area B in advance, whereby navigation can be received even in cases where the terminal device 20 is a terminal device such as a mobile phone, and roaming of the terminal device in service area B is not enabled.

The routine of this second embodiment can be utilized concomitantly with the routine of the first embodiment through a configuration whereby it is first determined whether roaming will be enabled in a case of travel of the terminal device 20 to the area where the destination is located, and the routine is executed only in cases where roaming is not possible. In the latter case, a configuration whereby the first route search server 30A whose service area is area A determines whether roaming of the terminal device 20 is possible in area B, and then transmits information regarding whether roaming is enabled to the second route search server 30B when prompting it for a route search. On the basis of this information, the second route search server 30B may then determine whether to execute the routine of the first embodiment or the routine of the second embodiment.

### [Third Embodiment]

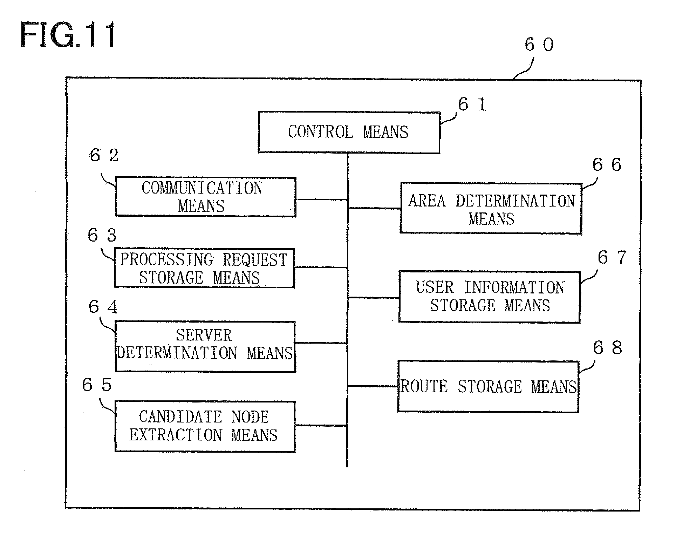

While the above-described first and second embodiments described examples in which route search servers 30A, 30B, etc., of individual areas determine a service area from the departure place and destination of the route search parameters, and discriminate a route search server for that area, a configuration whereby the processing of the present invention is executed through the agency of a route search agent server can also be adopted. FIG. 11 is a block diagram depicting a configuration of a route search agent server 60 for use in the navigation system of the present invention.

The route search agent server 60 depicted in FIG. 11 is connected via a network to the navigation system 10 depicted in FIG. 3, and is adapted to receive route search agency requests from route search servers 30A, 30B, etc.; to identify route search servers necessary for route search and navigation; to perform agency of route search requests; and to provide route search results to route search agency requesters. Here, operation of the route search agent server 60 will be described taking the example of a case where processing between the first route search server 30A and the second route search server 30B, described with reference to FIGS. 2 and 3, is executed via the route search agent server 60.

As depicted in FIG. 11, the route search agent server 60 is provided with control means 61, communication means 62, processing request storage means 63, server determination means 64, candidate node extraction means 65, area determination means 66, user information storage means 67, and route storage means 68. The control means 61 is provided with a microprocessor, ROM, and RAM, not shown, and controls operations of the various parts. The communication means 62 is an interface for transmitting and receiving information to and from the first route search server 30A, the second route search 30B, etc., via the network.

In the description below, an example of a case where a terminal device 20 makes a route search agency request by setting route search parameters with a point in area A as the departure place S and a point within area B as the destination G; the language to be displayed on the display means of the terminal device 20 is a first language (English) identical to the service provision language of the first route search server 30A having area A as its service area; and the service provision language of the second route search server 30B having the destination G as its service area is a second language (Japanese) is described.

When a user specifies a departure place S and a destination G and requests a route search in the terminal device 20, the terminal device 20 transmits to the first route search server 30A language information indicating the language to be displayed by the display means of the terminal device 20, together with a route search agency request that includes information about the departure place S and the destination G. Upon receiving the route search parameters including the departure place S and the destination G from the terminal device 20, the route search server 30A determines whether the destination G included in the route search parameters is point information that exists in area A which lies within the home area thereof.

In the case of a determination that the destination G is point information within the home area, the first route search server 30A carries out an ordinary route search; determines a recommended route (optimum route) in relation to obtained candidate routes and edits the navigation data on the basis thereof; and transmits the route information and navigation information to the terminal device 20. The terminal device 20 then displays the route information and navigation information received from the first route search server 30A on the display means.

On the other hand, the case of a determination that the destination is not point information within the home area, the candidate node extraction means 306A extracts all of the candidate nodes within the home area, and the route searching means 307A carries out a route search from the departure place S to the candidate nodes on the basis of the extracted candidate nodes. Candidate route information that includes a predetermined number of candidate routes obtained through route search, and required times relating to the candidate routes, is transmitted as a route search agency request together with information about the destination G (location information of the destination G), information about the candidate nodes, and language information for the terminal device 20, to the route search agent server 60 via the communication means 302A.

In the route search agent server 60, the route search agency request (processing request) that was received from the first route search server 30A is stored in the processing request storage means 63, and the ID, language information, etc., of the terminal device 20 is stored in the user information storage means 67. On the basis of the destination G included in the processing request, the area determination means 66 determines which service area the destination G belongs to. In this case, the area determination means 66 determines that the destination G lies in area B. The candidate node extraction means 66 is provided with a node information database, and on the basis of the area of the route search server 30A and the area determined by the area determination means 66 to be that to which the destination G belongs, extracts candidate nodes connecting area A and area B (FIG. 2, P1 to P3).

Next, the server determination means 64 determines that the second route search server 30B is a server providing service to area B. Once the second route search server 30B has been identified, the route search agent server 60 transmits to the second route search server 30B information about area A routes leading to the extracted candidate nodes (information about optimum routes from the departure place S to the candidate nodes in question within area A, found by the first route search server 30A), point information about the destination G, and language information for the terminal device 20, to the second route search server 30B.

In the second route search server 30B, on the basis of the received candidate route information and point information about the destination G, the route searching means 307B finds optimum routes from the candidate nodes included in the candidate route information (FIG. 2, P1 to P3) to a destination G1, designating these as candidate routes. On the basis of the candidate routes obtained as the result of the route search and candidate route information received from the route search agent server 60 (required times of the candidate routes from the departure place S to the candidate nodes P1 to P3), the recommended route determination means 313B determines a recommended route (optimum route) with the shortest total required time.

On the basis of route data of a candidate route P2G within area B, the second route search server 30B creates navigation information in the second language (Japanese), and creates link information for the terminal device 20 to access this navigation information. The created link information, together with information indicating that the route composed of the candidate route SP2 and the candidate route P2G is the recommended route, is transmitted to the route search agent server 60, whereupon the route search agent server 60 transmits this information to the first route search server 30 originating the request, and the first route search server 30 in turn transmits the information to the terminal device 20.

Once the terminal device 20 has received from the first route search server 30A the information about the recommended route navigation, the information for use within area A together with link information for linking to this navigation information, and the navigation information for use within area B together with link information for linking to this navigation information, the terminal device 20 accesses the navigation information in the respective areas on the basis of the link information, and requests navigation from the first route search server 30A and the second route search server 30B.

During navigation within area A, because the language of the first route search server 30A and the terminal device 20 is the first language (English), the terminal device 20 can be provided navigation through display of navigation information in English. On the other hand, in area B, because the language of the second route search server 30B is the second language (Japanese) whereas the language of the terminal device 20 is the first language (English), when navigation is requested from the second route search server 30B by the terminal device 20, the second route search server 30B translates the navigation information before transmission to the terminal device 20.

Specifically, when the terminal device 20 requests navigation from the second route search server 30B based on the link information received from the first route search server 30A to access the navigation information in area B, in the second route search server 30B, the output language determination means 310A determines whether the created navigation information is the same language as that identified by the language information received from the terminal device 20. If the language of the navigation information is the same as the language of the language information received from the terminal device 20, the created language information and link information created for accessing map data relating to the navigation information are transmitted by the communication means 302B to the terminal device 20 originating the navigation request.

In a case where the language of the created navigation information is different from the language identified by the language information received from the terminal device 20, the text extraction means 311B extracts navigation text, excluding key words which are proper names such as place names and line names, from the navigation information, and transmits the text together with the language information received from the terminal device 20 to the translation server 40, prompting translation into the language of the language information in question. In the present embodiment, the navigation information is in a second language which is the service provision language of the second route search server 30B, while the language of the language information is a first language, and therefore the text extraction means 311B extracts the navigation text from the navigation information and prompts the translation server 40 for translation into the second language.

In the translation server 40, once the navigation text to be translated and the language information to be displayed in the terminal device 20 are received from the second route search server 30B, the translation means 43 translates the navigation text into the language of the above-described language information (the first language) while referring to the language information database 44. The translated navigation text is then transmitted to the second route search server 30B via the communication means 42.

Once the second route search server 30B has received the translated navigation text from the translation server 40, the navigation information editing means 308B combines the navigation text that was translated into the language of the above-described language information (the first language) with the key words which are proper names such as place names, line names, etc., and which were left untranslated in the original language (the second language), and edits the translated navigation information. The created navigation information, together with the recommended route information and link information created for accessing map data relating to the navigation information in question, is transmitted by the communication means 302B to the terminal device 20 that originated the navigation request.

Consequently, while located within area A, the terminal device 20 is able to request to be provided navigation by the first route search server 30A, and to be provided navigation in the first language (English). Then, in a case of having traveled to within area B, the terminal device 20 is able to request to be provided navigation by the second route search server 30B, and to be provided navigation using navigation information that has been translated into the first language (English), except for key words such as proper nouns, etc. (which are in the second language, i.e., Japanese).

Like the routine described in the first embodiment, in cases where the languages of the second route search server 30B and the terminal device 20 are not the same when there is a request for navigation information from a terminal device 20 to the second route search server 30B, the above-described routine for translating navigation information in the second route search server 30B (area B) involves translating the navigation information for transmission to the terminal device 20; however, the routine described in the second embodiment, specifically, a configuration in which the navigation information is translated, and link information for linking to the navigation information is created in advance at the point in time that the second route search server 30B creates navigation information for within route area B, whereupon the information is transmitted to the route search agent server 60, can also be adopted.

According to the navigation system of the present invention which has been described in detail hereinabove, when the language used in the terminal device 20 and the language used to provided navigation service by a route search server are not the same, navigation text excluding key words which are proper names such as place names, line names, etc., is translated into the language used in the terminal device 20, and combined with the text with the key words that were left in the language used by the route search server to create the navigation information which is provided to the terminal device 20, whereby the terminal device 20 can be provided with navigation wherein key words such as proper nouns etc. are left untranslated, while information except for the key words is in the language used by the terminal device 20, and correspondence between a display of navigation information display and displays of proper nouns on maps and street plans of the locale can be easily understood.

### [Description of Symbols]

- 10: Navigation system
- 20: Terminal device
- 30A, 30B: Route search server
- 32: Map database
- 33: Route search network database
- 34: POI information database
- 40: Translation server
- 41: Control means
- 42: Communication means
- 43: Translation means
- 44: Language information database
- 301: Control means
- 302: Communication means
- 303: Processing request storage means
- 304: Area determination means
- 305: Server determination means
- 306: Candidate node extraction means
- 307: Route searching means
- 308: Navigation information editing means
- 309: Route search application screen creation means
- 310: Output language determination means
- 311: Text extraction means
- 312: Candidate route linking means
- 313: Recommended route determination means
- 314: Route storage means

## Claims

1. A navigation system composed of a first route search server having a first area as a service area, a second route search server having a second area as a service area, a terminal device, and a translation server connected via a network, wherein said navigation system is **characterized in that**
said first route search server is provided with server determination means for determining a route search server whose service area is an area that includes a point indicated by point information constituting a route search parameter received from said terminal device;
said second route search server is provided with route searching means for finding an optimum route that meets said route search parameter, navigation information editing means for creating navigation information on the basis of optimum route data found by said route searching means, output language determination means for determining whether said navigation information is in the language to be output by said terminal device, and text extraction means for extracting navigation text excepting key words from said navigation information;
said terminal device stores language information to be displayed; when said terminal device transmits said language information and point information constituting a route search parameter to said first route search server and requests a route search, in a case where an area including a point indicated by said point information is said second area, said server determination means of said first route search server determines a route search server whose service area is the area in question to be said second route search server, whereupon said first route search server transmits said language information and point information constituting said route search parameter to said second route search server to prompt for a route search;
in said second route search server, an optimum route that meets said route search parameter is found by said route searching means, and said navigation information editing means creates navigation information on the basis of said found optimum route data and transmits the information together with said optimum route data to said first route search server;
said first route search server transmits the optimum route information and navigation information received from said second route search server to said terminal device;
in said second route search server, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said first route search server or to said terminal device.

2. The navigation system according to claim 1, **characterized in that** in said second route search server, when there has been a request for navigation on the basis of navigation information transmitted to said terminal device, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said terminal device.

3. The navigation system according to claim 1, **characterized in that** in said second route search server, an optimum route that meets said route search parameter is found by said route searching means, said navigation information editing means creates navigation information on the basis of said found optimum route data, the output language determination means determines whether the language of said navigation information is the same as the language identified by said language information, and in a case where the language is not that same as that identified by said language information, said text extraction means extracts navigation text excepting key words from said navigation
information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said first route search server.

4. The navigation system according to any of claims 1 to 3, **characterized in that** said route search parameter includes a departure place within said first area, said first route search server is provided with route searching means and with candidate node extraction means for extracting point information of at least one candidate node reachable in said second area from said first area, and said route searching means of said first route search server finds an optimum route leading from said departure place to said candidate node, and transmits the route together with said optimum route information received from said second route search server to said terminal device.

5. The navigation system according to claim 1, **characterized in that** said navigation information is composed of said key words and said navigation text, said keys words are proper names including place names and line names, and said navigation text is text for navigating a route.

6. The navigation system according to claim 1, **characterized in that** said second route search server is provided with route search application screen creation means for creating screens composed with XML in order to display information including said navigation information on said terminal device, said text extraction means extracts text excepting screen data included in XML and the key words from said navigation information, and prompts said translation server for translation, and said navigation information editing means combines said translated text and the key words to create translated screen data.

7. A route search server constituting a first route search server in a navigation system composed of said first route search server having a first area as a service area, a second route search server having a second area as a service area, a terminal device, and a translation server connected via a network, wherein said route search server is **characterized by**
being provided with server determination means for determining a route search server whose service area is an area that includes a point indicated by point information constituting a route search parameter received from said terminal device; wherein
when a route search request including language information indicating a language to be displayed on said terminal device and point information constituting a route search parameter is received from said terminal device, in a case where an area including a point indicated by said point information is said second area, the route search server whose service area is the area in question is determined by said server determination means to be the second route search server, said language information and point information constituting said route search parameter are transmitted to said second route search server which is asked for a route search, and when translated navigation information
created in the second route search server and in which only navigation text excepting key words has been translated by said translation server is received, the translated navigation information in question is transmitted to said terminal device.

8. A route search server constituting a second route search server in a navigation system composed of a first route search server having a first area as a service area, said second route search server having a second area as a service area, a terminal device, and a translation server connected via a network, wherein said route search server is **characterized by**
being provided with route searching means for finding an optimum route that meets a route search parameter from the terminal device, navigation information editing means for creating navigation information on the basis of optimum route data found by said route searching means, output language determination means for determining whether said navigation information is in the language to be output by said terminal device, and text extraction means for extracting navigation text excepting key words from said navigation information;
in said second route search server, an optimum route that meets said route search parameter is found by said route searching means, and said navigation information editing means creates navigation information on the basis of said found optimum route data and transmits the information together with said optimum route data to said first route search server; and
in said second route search server, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said first route search server or to said terminal device.

9. The route search server according to Claim 7 or 8, **characterized in that** said route search parameter includes a departure place within said first area, said first route search server is provided with route searching means and with candidate node extraction means for extracting point information of at least one candidate node reachable in said second area from said first area, and said route searching means of said first route search server finds an optimum route leading from said departure place to said candidate node, and transmits the route together with said optimum route information received from said second route search server to said terminal device.

10. A route search server constituting one of a plurality of route search servers in a navigation system composed of said plurality of route search servers having different areas as respective service areas, a terminal device, and a translation server connected via a network, wherein said route search server is **characterized by**
being provided with server determination means for determining a route search server whose service area is an area that includes a point indicated by point information constituting a route search parameter received from said terminal device, route searching means for finding an optimum route that meets said route search parameter, navigation information editing means for creating navigation information on the basis of optimum route data found by said route searching means, output language determination means for determining whether said navigation information is in the language to be output by said terminal device, and text extraction means for extracting navigation text excepting key words from said navigation information; wherein
in a case where a route search request including language information indicating a language to be displayed on said terminal device and point information constituting a route search parameter is received from said terminal device, said server determination means determines a route search server whose service area is a point indicated by the point information as said route search parameter, transmits said language information and point information constituting said route search parameter to said determined route search server, and asks for a route search, and in a case where navigation information is received from the route search server asked for said route search, transmits said navigation information to said terminal device;
in a case where a route search request including language information and point information constituting a route search parameter is received from another route search server, an optimum route that meets said route search parameter is found by said route searching means, and said navigation information editing means creates navigation information on the basis of said found optimum route data and transmits the information together with said optimum route data to said other route search server; and
the output language determination means determines whether the language of said navigation information is the same as the language identified by said language information, and in a case where the language is not that same as that identified by said language information, said text extraction means extracts navigation text excepting key words from said navigation information and prompts said translation server for translation, and when said navigation text translated into the same language as said language information is received from said translation server, said navigation information editing means creates translated navigation information that combines said translated navigation text and said key words, and provides the information to said terminal device or to the other route search server from which the route search request was received.

11. The route search server according to Claim 10, **characterized in that** said route search parameter includes a departure place within an area, said route search server is provided with route searching means and with candidate node extraction means for extracting point information of at least one candidate node reachable in another area from said area, and said route searching means of said route search server finds an optimum route leading from said departure place to said candidate node, and transmits the route together with said optimum route information received from said other route search server to said terminal device.

12. The route search server according to any of Claims 7 to 9, **characterized in that** said navigation information is composed of said key words and said navigation text, said keys words are proper names including place names and line names, and said navigation text is text for navigating a route.

13. The route search server according to any of Claims 7 to 9, **characterized in that** the route search server is provided with route search application screen creation means for creating screens composed with XML in order to display information including said navigation information on said terminal device, said text extraction means extracts text excepting screen data included in XML and the key words from said navigation information, and prompts said translation server for translation, and said navigation information editing means combines said translated text and the key words to create translated screen data.

14. A navigation method in a navigation system composed of a first route search server having a first area as a service area, a second route search server having a second area as a service area, a terminal device, and a translation server connected via a network, wherein said navigation method is **characterized in that** language information to be displayed is stored in said terminal device;
said language information and point information constituting a route search parameter are transmitted from said terminal device to said first route search server to request a route search;
in a case where an area including a point indicated by said point information is said second area, said first route search server determines a route search server whose service area is the area in question to be said second route search server, and transmits said language information and point information constituting said route search parameter to said second route search server to prompt for a route search;
said second route search server finds an optimum route that meets said route search parameter, creates navigation information on the basis of said found optimum route data, and transmits the information together with said optimum route data to said first route search server;
in said second route search server, it is determined whether the language of said navigation information is the same as the language identified by said language information, and in a case where the language is not that same as that identified by said language information, navigation text excepting key words is extracted from said navigation information and said translation server is asked for translation;
said translation server translates said navigation text into the same language as said language information and transmits the translation to said second route search server; and
said second route search server creates translated navigation information that combines said translated navigation text and said key words, for transmission via said first route search server, or to said terminal device.

15. The navigation method according to Claim 14, **characterized in that** in said second route search server, when there has been a request for navigation on the basis of navigation information transmitted to said terminal device, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said terminal device.

16. The navigation method according to Claim 14, **characterized in that** in said second route search server, an optimum route that meets said route search parameter is found by said route searching means, said navigation information editing means creates navigation information on the basis of said found optimum route data, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said first route search server.

17. The navigation method according to any of Claims 14 to 16, **characterized in that** said route search parameter includes a departure place within said first area, said first route search server is provided with route searching means and with candidate node extraction means for extracting point information of at least one candidate node reachable in said second area from said first area, and said route searching means of said first route search server finds an optimum route leading from said departure place to said candidate node, and transmits the route together with said optimum route information received from said second route search server to said terminal device.

18. The navigation method according to any of Claims 14 to 16, **characterized in that** said navigation information is composed of said key words and said navigation text, said keys words are proper names including place names and line names, and said navigation text is text for navigating a route.

19. The navigation method according to any of Claims 14 to 16, **characterized in that** said second route search server is provided with route search application screen creation means for creating screens composed with XML in order to display information including said navigation information on said terminal device, said text extraction means extracts text excepting screen data included in XML and the key words from said navigation information, and prompts said translation server for translation, and said navigation information editing means combines said translated text and the key words to create translated screen data.

20. A navigation system comprising a first route search server having a first area as a service area, a second route search server having a second area as a service area, a terminal device connected via a network to at least the first route search server in said first area, and a route search agent server connected to a plurality of route search servers, wherein said navigation system is **characterized in that**
said route search agent server is provided with server determination means for determining a route search server whose service area is an area that includes a point indicated by point information constituting a route search parameter received from said first route search server when said first route search server has received point information determined to not be the service area thereof;
said second route search server is provided with route searching means for finding an optimum route that meets said route search parameter, navigation information editing means for creating navigation information on the basis of optimum route data found by said route searching means, output language determination means for determining whether said navigation information is in the language to be output by said terminal device, and text extraction means for extracting navigation text excepting key words from said navigation information;
said terminal device stores language information to be displayed; when said terminal device transmits said language information and point information constituting a route search parameter to said first route search server and requests a route search, in a case where the server determination means of said first route search server has determined, on the basis of an area including a point indicated by said point information, that the point indicated by said point information is not within the service area of said first route search server, said first route search server transmits said language information and point information constituting said route search parameter to said route search agent server to prompt a route search;
in a case where said server determination means, on the basis of route search prompt information received from the first route search server, discriminates that the route search server having said point as the service area is said second route search server, said route search agent server transmits said language information and point information constituting said route search parameter to said second route search server;
in said second route search server, an optimum route that meets said route search parameter is found by said route searching means, and said navigation information editing means creates navigation information on the basis of said found optimum route data and transmits the information together with said optimum route data to said route search agent server;
said route search agent server transmits the optimum route information and navigation information received from said second route search server to said terminal device;
in said second route search server, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said route search agent server or to said terminal device.

21. The navigation system cording to Claim 20, **characterized in that** in said second route search server, when there has been a request for navigation on the basis of navigation information transmitted to said terminal device, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said terminal device.

22. The navigation system according to Claim 20, **characterized in that** in said second route search server, an optimum route that meets said route search parameter is found by said route searching means, said navigation information editing means creates navigation information on the basis of said found optimum route data, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said route search agent server.

23. The navigation system according to any of Claims 20 to 22, **characterized in that** said route search parameter includes a departure place within said first area, said first route search server is provided with route searching means and with candidate node extraction means for extracting point information of at least one candidate node reachable in another area from said first area, the route searching means of said first route search server finds optimum routes leading from said departure place to said candidate nodes and transmits the routes to said route search agent server, said route search agent server is provided with candidate node extraction means whereby, from the candidate nodes and information about optimal routes leading to said candidate nodes received from said first route search server, a candidate node leading to an area serviced by the second route search server that was determined by said server determination means is extracted, the extracted candidate node in question and information about the optimal route leading to said candidate node are transmitted to said second route search server, and when information about an optimal route from said candidate node to said destination found by said second route search server, and navigation information created on the basis of the optimal route information in question, are received from said second route search server, said optimal route information and navigation information are transmitted to said first route search server.

24. The navigation system according to Claim 20, **characterized in that** said navigation information is composed of said key words and said navigation text, said keys words are proper names including place names and line names, and said navigation text is text for navigating a route.

25. The navigation system according to Claim 20, **characterized in that** said second route search server is provided with route search application screen creation means for creating screens composed with XML in order to display information including said navigation information on said terminal device, said text extraction means extracts text excepting screen data included in XML and the key words from said navigation information, and prompts said translation server for translation, and said navigation information editing means combines said translated text and the key words to create translated screen data.

26. A route search agent server constituting a navigation system which comprises a first route search server having a first area as a service area, a second route search server having a second area as a service area, a terminal device connected via a network to at least the first route search server in said first area, and a route search agent server connected to a plurality of route search servers, said route search agent server **characterized in that**
said route search agent server is provided with server determination means for determining a route search server whose service area is an area that includes a point indicated by point information constituting a route search parameter received from said first route search server when said first route search server has received point information determined to not be the service area thereof;
said second route search server is provided with route searching means for finding an optimum route that meets said route search parameter, navigation information editing means for creating
navigation information on the basis of optimum route data found by said route searching means, output language determination means for determining whether said navigation information is in the language to be output by said terminal device, and text extraction means for extracting navigation text excepting key words from said navigation information, whereby an optimum route that meets said route search parameter is found by said route searching means, whereupon said navigation information editing means creates navigation information on the basis of said found optimum route data, and transmits the information together with said optimum route data to said route search agent server;
said terminal device stores language information to be displayed; when said terminal device transmits said language information and point information constituting a route search parameter to said first route search server and requests a route search, in a case where the server determination means of said first route search server has determined, on the basis of an area including a point indicated by said point information, that the point indicated by said point information is not within the service area of said first route search server, said first route search server transmits said language information and point information constituting said route search parameter to said route search agent server to prompt a route search; and
in a case where said server determination means, on the basis of route search prompt information received from the first route search server, discriminates that the route search server having said point as the service area is said second route search server, said route search agent server transmits said language information and point information constituting said route search parameter to said second route search server, and transmits optimum route information and navigation information received from said second route search server to said terminal device.

27. The route search agent server according to Claim 26, **characterized in that** in said second route search server, an optimum route that meets said route search parameter is found by said route searching means, said navigation information editing means creates navigation information on the basis of said found optimum route data, the output language determination means determines whether the language of said navigation information is the same as the language identified by said language information, and in a case where the language is not that same as that identified by said language information, said text extraction means extracts navigation text excepting key words from said navigation information and prompts said translation server for translation, whereupon said translation server translates said navigation text into the same language as said language information and transmits the translation to said second route search server, and said navigation information editing means of said second route search server creates translated navigation information that combines said translated navigation text and said key words, and transmits said translated navigation information to said route search agent server, whereupon said route search agent server transmits the navigation information received from said second route search server to said first route search server.
